(19) **Europäisches Patentamt European Patent Office Office européen des brevets**

(11) **EP 4 653 494 A1**

(12) **EUROPEAN PATENT APPLICATION**

(43) Date of publication:
26.11.2025 Bulletin 2025/48

(21) Application number: 24177689.7

(22) Date of filing: 23.05.2024

(51) International Patent Classification (IPC):
$C08K\ 3/22^{(2006.01)}$   $C08K\ 5/103^{(2006.01)}$
$C08L\ 23/12^{(2006.01)}$

(52) Cooperative Patent Classification (CPC):
(C-Sets available)
**C08K 3/22; C08K 5/103;** C08K 3/013; C08K 5/005;
C08K 2003/222                    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **GLOGER, Dietrich**
  **4021 Linz (AT)**
• **REICHELT, Norbert**
  **4021 Linz (AT)**

(74) Representative: **Maiwald GmbH**
**Elisenhof**
**Elisenstraße 3**
**80335 München (DE)**

(54) **USE OF A BASIC METAL OXIDE, AND A COMPOSITION COMPRISING A BASIC METAL OXIDE**

(57)     The present disclosure relates to a use of a basic metal oxide for reducing the formation of one or more decomposition products upon heating of a glycerol fatty acid ester. The present disclosure further relates to a composition comprising a basic metal oxide and a glycerol fatty acid ester, and particularly to a polymer composition comprising polypropylene, a basic metal oxide and a glycerol fatty acid este

FIG. 21

(52) Cooperative Patent Classification (CPC): (Cont.)

C-Sets
**C08K 3/22, C08L 23/12;**
**C08K 5/103, C08L 23/12;**
**C08L 23/12, C08L 23/0815, C08K 5/103,**
**C08K 3/22, C08K 3/346**

## Description

### TECHNICAL FIELD

The present invention relates to the use of a basic metal oxide for reducing the formation of one or more decomposition products upon heating of a glycerol fatty acid ester. The present invention further relates to a composition comprising a basic metal oxide and a glycerol fatty acid ester, and particularly to a polymer composition comprising polypropylene, a basic metal oxide, and a glycerol fatty acid ester.

### TECHNICAL BACKGROUND

Decomposition of glycerol fatty acid esters upon heating is generally known in the art. One typical decomposition product of glycerol fatty acid esters is acrolein. Acrolein can be toxic, irritant, detrimental to the environment, and is under scrutiny for being potentially cancerogenic. Thus, acrolein is typically of concern, e.g., when there is a risk of uncontrolled release to the environment.

Monoglycerides, like glycerol monostearate (GMS), are used in polymer compositions as functional additives, e.g., for providing a slip/lubricant effect and/or an antistatic effect. The preparation of a polymer composition usually contains a melt mixing step, for example in a plastic extruder, during which the monoglycerides are typically heated to comparatively high temperatures which can result in decomposition reactions. The decomposition products of the monoglycerides can remain in the polymer composition as part of a fraction of volatile organic compounds which may gradually be released to its surroundings.

Specific glycerol fatty acid esters comprising one or more (poly)unsaturated fatty acid esters are useful as coupling/branching agents for making polymer compositions. WO2022/238520 A1 describes, for example, the use of a glycerol fatty acid ester comprising polyunsaturated fatty acids derived from linseed oil as a coupling/branching agent for making high melt strength polypropylene by electron beam irradiation. The process can include a first step of preparing a polymer compound by melt compounding or melt extruding a polypropylene base material together with linseed oil comprising the glycerol fatty acid ester. Subsequently, the polymer compound can be subjected to electron beam irradiation to achieve a branching of the polypropylene base material to provide a high melt strength polypropylene. Afterwards, the high melt strength polypropylene may be further processed, for example, by a heat treatment. Thus, the process for preparing a high melt strength polypropylene as described in WO2022/238520 A1 may include one, two or more steps which include the heating of the glycerol fatty acid ester.

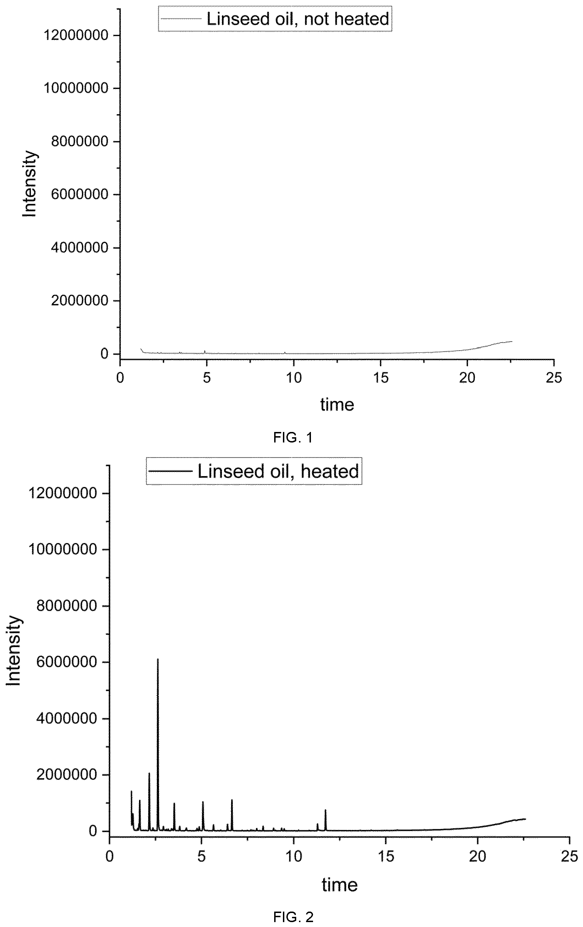

Furthermore, it is known that triglycerides which may form the basis of fats and vegetable oils can decompose to a variety of decomposition products when being heated. For example, Jiang et al., "Origin and Fate of Acrolein in Foods", Foods 2022, 11, 1976, describe the formation of acrolein during heating of triglycerides (cf. Fig. 1 of Jiang et al.). Specifically, two decomposition pathways are suggested by Jiang et al. which can lead to the formation of acrolein. A first pathway (also referred to as "hydrolysis pathway") starts with a hydrolysis of a triglyceride to glycerol and fatty acids, after which the glycerol and fatty acids convert into acrolein by a series of dehydration reactions. A second pathway (also referred to as "free radical pathway") is based on a successive abstraction of fatty acid radicals from a triglyceride by radical chain scission after which a remaining glycerol-derived fragment converts into acrolein. Jiang et al. further describe an oxidative degradation of polyunsaturated fatty acid upon heating which may also lead to acrolein formation (optionally together with other decomposition products).

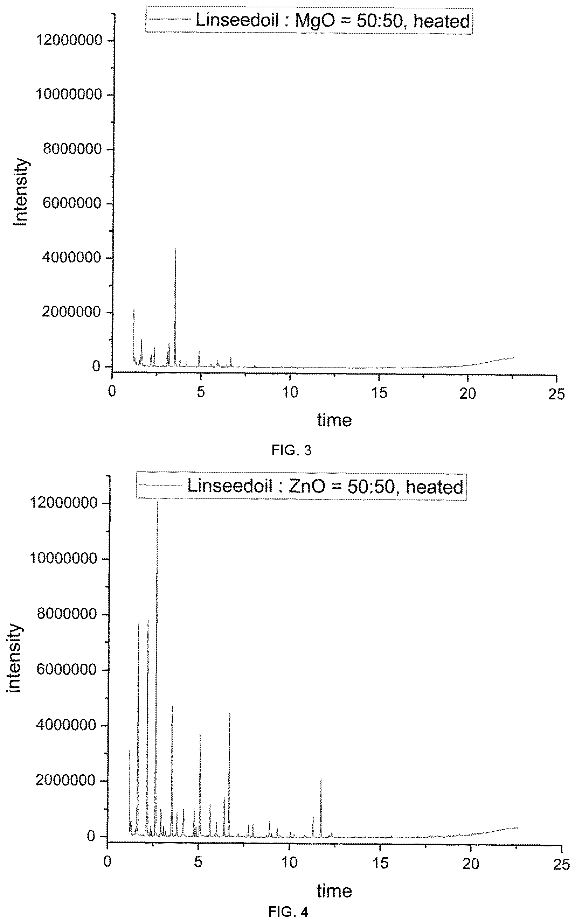

Furthermore, Satyarthi et al., "An overview of catalytic conversion of vegetable oils/fats into middle distillates". Catalysis Science & Technology, 2013 3(1), 70-80 describe the formation of volatiles upon heating of glyceride. The volatiles may include (but are not limited to) aldehydes, and particularly acrolein, or aromatics, and particularly benzene (cf. Fig. 2 and 3 of Satyarthi et al.). According to Satyarthi et al., the formation of benzene may be the result of a Diels-Alder reaction of butadiene originating from a decomposition of unsaturated fatty acids.

The formation of aromatics, like benzene, has also been reported for the heating of poly(vinyl chloride), for example, by O' Mara (1977), "Combustion of PVC", and Montaudo, G., & Puglisi, C. (1991), "Evolution of aromatics in the thermal degradation of poly (vinyl chloride): a mechanistic study", Polymer Degradation and Stability, 33(2), 229-262. In that context, two mechanisms are discussed: 1) polyene formation by loss of HCl from PVC, followed by chain scission of the polyene under formation of macro radicals (with conjugated double bonds), followed by intermolecular cyclization of such radicals and finally aromatization; 2) intramolecular Diels-Alder cyclisation of polyenes.

The controlled decomposition of a glycerol fatty acid ester upon heating is sometimes purposively used to produce a certain chemical product (e.g., in the context of making biofuels). However, in other circumstances, it is typically desirable to reduce or suppress the degradation or decomposition of glycerol fatty acid esters and/or the formation of volatiles originating from glycerol fatty acid esters which can occur upon heating. In particular, it is often desirable to reduce formation of acrolein as far as possible.

Thus, there is a need in the art to reduce the (undesired) formation of decomposition products (including volatiles such as acrolein) upon heating of glycerol fatty acid esters, like monoglycerides or triglycerides. There is also a need in the art for compositions, and especially polymer compositions, which contain a glycerol fatty acid ester and which show little or less of certain decomposition products (including volatiles such as acrolein) which typically occur upon heating.

One object of the present invention may therefore be seen in the provision of a method or a use for reducing the formation of decomposition products upon heating of a glycerol fatty acid ester. One object may be to provide compositions, and especially polymer compositions, which contain a glycerol fatty acid ester and which show little or less of certain decomposition products (including volatiles such as acrolein) which typically occur upon heating.

**SUMMARY OF THE INVENTION**

One embodiment of the present invention provides a use of a basic metal oxide for reducing the formation of one or more decomposition products upon heating of a glycerol fatty acid ester.

One embodiment of the present invention provides a method for reducing the formation of one or more decomposition products upon heating of a glycerol fatty acid ester. The method comprises the steps of:

-  combining a basic metal oxide and a glycerol fatty acid ester, and
-  heating the combination of the basic metal oxide and the glycerol fatty acid ester.

Another embodiment of the invention provides a polymer composition comprising polypropylene, a basic metal oxide and a glycerol fatty acid ester.

One general finding of the present invention is that a basic metal oxide is useful for reducing the formation of one or more decomposition products, like volatile organic compounds including (but not limited to) acrolein, when heating a glycerol fatty acid ester, like a monoglyceride (e.g., glycerol monostearate/GMS) or triglyceride (e.g. a triglyceride comprising one or more (poly)unsaturated fatty acids, like those occurring in linseed oil). Without wishing to be bound by theory, it is believed that the reduction of the formation of the one or more decomposition products may be due to an influence (e.g., a suppressing effect) of the basic metal oxide on ester hydrolysis reactions which may possibly occur when heating glycerol fatty acid esters. The use of the basic metal oxide as described herein may advantageously be applied to processes in which a glycerol fatty acid ester is heated (e.g., as part of a polymer melt processing step) and for which the formation of a decomposition product is typically not desirable.

Selected embodiments of the invention are defined in the dependent claims.

In one embodiment, the one or more decomposition products is/are selected from the group consisting of acetaldehyde, acetone, propanal, acrolein, pentanal, butenal, and heptadienal. In one specific embodiment, the one or more decomposition product is acrolein.

In one embodiment, the glycerol fatty acid ester is a monoester of glycerol and a saturated fatty acid. In an alternative embodiment, the glycerol fatty acid ester is a triglyceride containing one or more esters of a fatty acid selected from the group of monounsaturated fatty acids and polyunsaturated fatty acids, and optionally wherein the triglyceride is present as part of a vegetable oil.

In one embodiment, the basic metal oxide is selected from the group consisting of basic alkaline oxides and basic earth alkaline oxides. In one specific embodiment, the basic metal oxide is magnesium oxide.

In one embodiment, the heating is a heating to a (maximum) temperature of at least 150°C, like in a range of 180 to 260°C.

In one embodiment, the basic metal oxide and the glycerol fatty acid ester are present in combination with at least one polypropylene, and wherein the heating is carried out as part of a process for preparing a polymer composition, e.g., by melt mixing, melt compounding or melt extrusion.

In one embodiment, the polymer composition further comprises an ethylene-based elastomer, a mineral filler, and optionally one or more additives. In one embodiment, the basic metal oxide is magnesium oxide, the ethylene-based elastomer is a copolymer of ethylene and 1-octene, the mineral filler is talc, and the glycerol fatty acid ester is glycerol monostearate.

In one embodiment, the polymer composition is a polymer compound, and the glycerol fatty acid ester comprises at least one polyunsaturated fatty acid which is selected from $\alpha$-linolenic acid, linoleic acid and a combination thereof.

One embodiment of the invention provides a high melt strength polypropylene which is obtained by electron beam irradiating a polymer composition according to an embodiment of the invention.

**DEFINITIONS**

The expression "for reducing the formation of one or more decomposition products upon heating of a glycerol fatty acid ester" as used herein is to be understood in that a formation of one or more decomposition products upon heating of a glycerol fatty acid ester is reduced by using a basic metal oxide as described herein, when compared to the formation of the one or more decomposition products upon heating of the glycerol fatty acid ester under the same conditions (e.g., temperature, pressure, and duration) but in the absence of the basic metal oxide. For example, a use of magnesium oxide as a basic metal oxide for reducing the formation of acrolein upon heating of a glycerol fatty acid ester, or a (polymer) composition comprising the same, is to be understood in that a formation of acrolein upon heating of the glycerol fatty acid ester, or the (polymer) composition comprising the same), is reduced by using magnesium oxide as described herein, when compared to the formation of acrolein upon heating of the glycerol fatty acid ester, or the (polymer) composition comprising the same, under the same conditions (e.g., temperature, pressure, and duration) but in the absence of magnesium oxide.

The reduction of the formation of the one or more decomposition product can be determined by a person of skill in the art. For example, the reduction of the formation of the one or more decomposition products may be determined after completion of the heating and after cooling of the glycerol fatty acid ester, or a (polymer) composition comprising the same, to an ambient temperature (e.g., a temperature in a range of 5 to 35°C), and is optionally determined at a point in time which is at most 28 days (e.g., at most 21 days or at most 14 days or at most 1 day or at most 12 h) after completion of the heating. The heated glycerol fatty acid ester, or a (polymer) composition comprising the same, may be stored in a sealed container before the measurement. A skilled person knows how to determine and/or quantify the one or more decomposition products which can form upon heating of a glycerol fatty acid ester or a (polymer) composition comprising the same. For example, the reduction of the one or more decomposition product may be determined and/or quantified by chromatography, like gas chromatography such as headspace gas chromatography (HS-GC) which is optionally combined with mass spectrometry (HS-GC-MS).

The expression "one or more decomposition product" is to be understood in a broad sense as encompassing organic compounds which can form or which form by heating a glycerol fatty acid ester (e.g., to a temperature of at least 150°C or at least 180°C). This includes organic compounds which result from ester hydrolysis, hydration, dehydration and chain scission of a glycerol fatty acid ester or a decomposition product originating therefrom. This also includes organic compounds which can result from an oxidative degradation, i.e., a reaction of the glycerol fatty acid ester or a decomposition product originating therefrom in the presence of oxygen. For example, the one or more decomposition products may be (but are not necessarily limited to) branched or unbranched, saturated or unsaturated aliphatic carbonyl group-containing compounds, e.g., branched or unbranched, saturated or unsaturated aliphatic aldehydes (e.g., acetaldehyde, propanal, acrolein, pentanal, butenal, and heptadienal), branched or unbranched, saturated or unsaturated aliphatic ketones (e.g., acetone), branched or unbranched, saturated or unsaturated aliphatic amides and branched or unbranched, saturated or unsaturated aliphatic esters, branched or unbranched, saturated or unsaturated aliphatic carboxylic acids (e.g., fatty acids or aliphatic carboxylic acids derived therefrom). Furthermore, the one or more decomposition product may be an aromatic compound, and particularly benzene.

A "volatile" organic compound as described herein is an organic compound which has a boiling point of below 250°C.

A "glycerol fatty acid ester" as used herein refers to an optionally substituted glycerol (i.e., an optionally substituted 1,2,3-propane triol) which is linked to least one fatty acid via an ester bond. As such, the term "glycerol fatty acid ester" encompasses monoglycerides (also referred to herein as "glycerol fatty acid monoesters"), diglycerides (also referred to herein as "glycerol fatty acid diesters"), and triglycerides (also referred to herein as "glycerol fatty acid triesters"). A "fatty acid" as used herein is a carboxylic acid with a C4-C28 saturated or unsaturated aliphatic chain. The aliphatic chain of a fatty acid is typically unbranched. For the purpose of the present disclosure, the "glycerol fatty acid ester" is not considered to fall under one or more additives which are typically present in a polymer composition as described herein. Thus, when an amount of one or more additives in a polymer composition is described herein, this amount does not include the amount of the glycerol fatty acid ester which is present in that polymer composition.

A "polyunsaturated" fatty acid as used herein is a fatty acid having at least two (e.g., two or three) C-C double bonds. Polyunsaturated fatty acids may be, but are not limited to, linoleic acid, eicosadienoic acid, docosadienoic acid, α-linolenic acid, γ-linolenic acid, pinolenic acid, eleostearic acid, dihomo-γ-linolenic acid, eicosatrienoic acid, stearidonic acid, arachidonic acid, eicosatetraenoic acid, or adrenic acid.

A "basic metal oxide" in the meaning of the present disclosure is a metal oxide which accepts a proton when dissolved in water. Basic metal oxides are known by the skilled person and a skilled person is capable of determining whether a given metal oxide is a basic metal oxide (e.g., by pH measurement). Basic metal oxides are, for example, lithium oxide, sodium oxide, potassium oxide, rubidium oxide, cesium oxide, magnesium oxide, calcium oxide, strontium oxide, barium oxide, titanium (+II or +III) oxide, scandium (+III) oxide, vanadium (+II or +III) oxide, chromium (+II or +III) oxide, manganese (+II or +III) oxide, iron (+II) oxide, cobalt (+II) oxide, and nickel (+II) oxide. Basic metal oxides are different from amphoteric metal oxides and acidic metal oxides. Thus, a basic metal oxide in the meaning of the present disclosure is not an amphoteric metal oxide. An amphoteric metal oxide is, for example, zinc oxide. Acidic metal oxides are, for example, chromium (+V or +VI) oxide and manganese (+V or +VI) oxide. Basic metal oxides, amphoteric metal oxides, and acidic metal oxides are described, e.g., in "Shriver and Atkins' Inorganic Chemistry", Oxford University Press, 5th edition, 2010, Chapter 4.6, p. 126/127.

The term "polypropylene" as used herein is to be understood in a broad sense in that it encompasses propylene homopolymers, copolymers of propylene, heterophasic propylene copolymers (HECOs), and mixtures of said substances.

The term "propylene homopolymer" relates to a polypropylene that consists substantially, i.e. of at least 99.5 wt.%, preferably of at least 99.8 wt.%, like of at least 99.9 wt.%, of propylene units.

The term "copolymer of propylene" as used herein refers to a copolymer of propylene with one or more $\alpha$-olefin, for example, one or more $\alpha$-olefin chosen from the group of $\alpha$-olefins having 2 or 4 to 10 C-atoms, like ethylene. The amount of $\alpha$-olefin, like ethylene, is typically less than 10 wt. % (e.g., in a range of 1 to less than 8 wt.%), based on the total weight of the propylene copolymer.

A "heterophasic propylene copolymer (HECO)" in the meaning of the present disclosure is a propylene polymer composition comprising: i) a matrix (M) being a propylene homo- or copolymer, and ii) an elastomer (E) being a copolymer comprising units derived from propylene and ethylene and/or $C_4$ to $C_8$ a-olefin. In that context, the term "heterophasic" indicates that the elastomer is (finely) dispersed in the (crystalline) matrix. In other words, the elastomer forms inclusions in the matrix. Thus, the matrix contains (finely) dispersed inclusions being not part of the matrix and said inclusions contain the elastomer. The term "inclusion" can be understood in that the matrix and the inclusion form different phases within the propylene copolymer (HECO), said inclusions are for instance visible by high resolution microscopy, like electron microscopy or scanning force microscopy. The elastomeric phase has typically a high amount of ethylene and/or $C_4$ to $C_8$ a-olefin comonomer (usually ethylene) that is not randomly distributed in the polymer chain but is distributed in a comonomer-rich block structure and a propylene-rich block structure. A heterophasic propylene copolymer usually differentiates from a one-phasic propylene copolymer, for example, in that it shows two distinct glass transition temperatures Tg which are attributed to the matrix phase and the elastomeric phase.

A "high melt strength polypropylene" as used herein refers to a polypropylene which is branched and, thus, differs from a linear polypropylene in that the polypropylene backbone covers side chains whereas a non-branched polypropylene, i.e. a linear polypropylene, does not cover side chains. The side chains have significant impact on the rheology of the polypropylene. Accordingly, linear polypropylenes and high melt strength polypropylenes can be clearly distinguished by their flow behavior under stress.

Where the term "comprising" is used herein, it does not exclude that further non-specified elements are present. Where the term "essentially consisting of" is used herein, it is does not exclude that further non-specified elements are present that are not materially affecting the essential characteristics of the defined subject-matter. For the purposes of the present invention, the terms "essentially consisting of' and "consisting of' are considered to be specific embodiments of the term "comprising of". Whenever the terms "including" or "having" are used, these terms are meant to be equivalent to "comprising" as defined above.

## FIGURES

FIG.1    shows a HS-GC-MS plot measured for a sample of linseed oil which has not been heated to 250°C (Ref. 1).

FIG. 2    shows HS-GC-MS plot measured for a sample of linseed oil which has been heated to 250°C without addition of a metal oxide (Ref. 2).

FIG. 3    shows HS-GC-MS plot measured for a sample of linseed oil which has been heated to 250°C in combination with MgO as a basic metal oxide (example IE1).

FIG. 4    shows HS-GC-MS plot measured for a sample of linseed oil which has been heated to 250°C in combination with ZnO as an amphoteric metal oxide (example CE1).

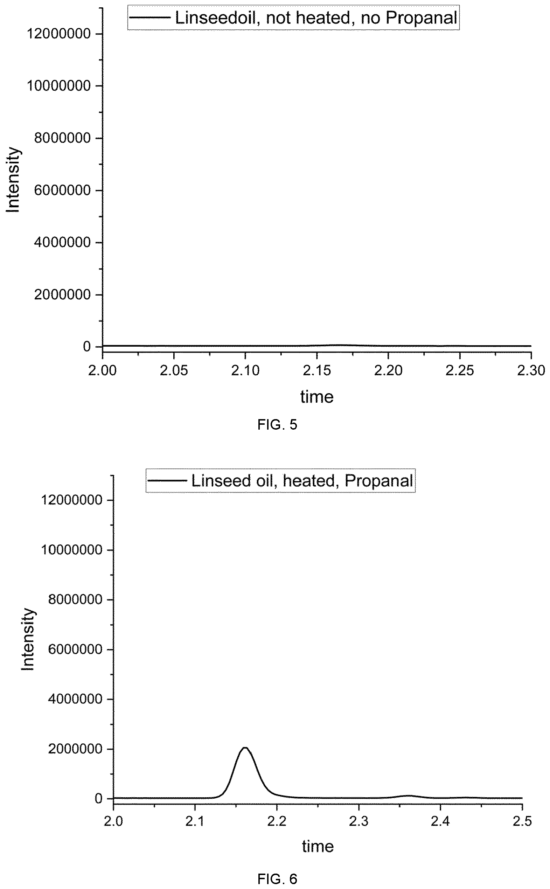

FIG. 5    shows an enlarged excerpt of the signals shown in the plot of FIG. 1 measured between 2.00 to 2.30 min.

FIG. 6    shows an enlarged excerpt of the signals shown in the plot of FIG. 2 measured between 2.00 to 2.50 min. The signal at about 2.16 min was identified as propanal.

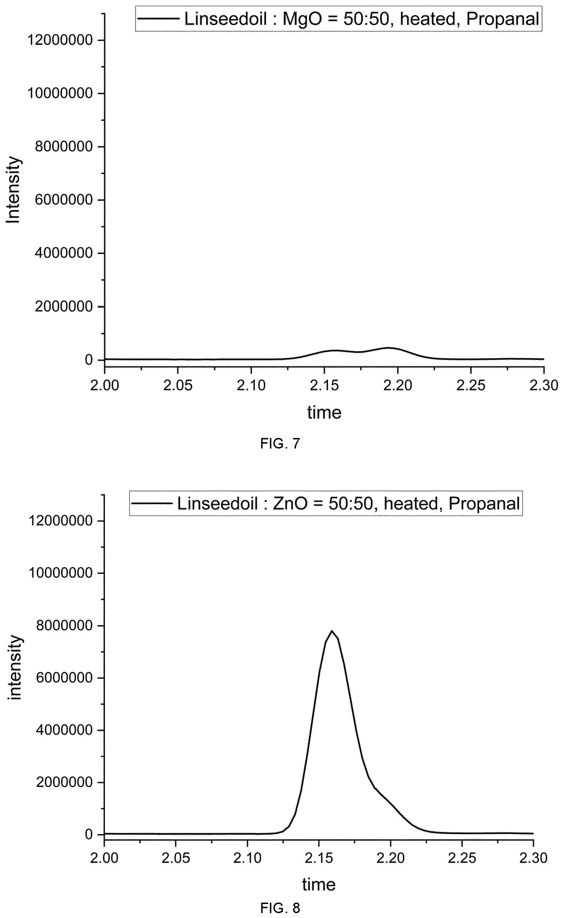

FIG. 7    shows an enlarged excerpt of the signals shown in the plot of FIG. 3 measured between 2.00 to 2.30 min. The signal at about 2.16 min was identified as propanal.

FIG. 8    shows an enlarged excerpt of the signals shown in the plot of FIG. 4 measured between 2.00 to 2.30 min. The signal at about 2.16 min was identified as propanal.

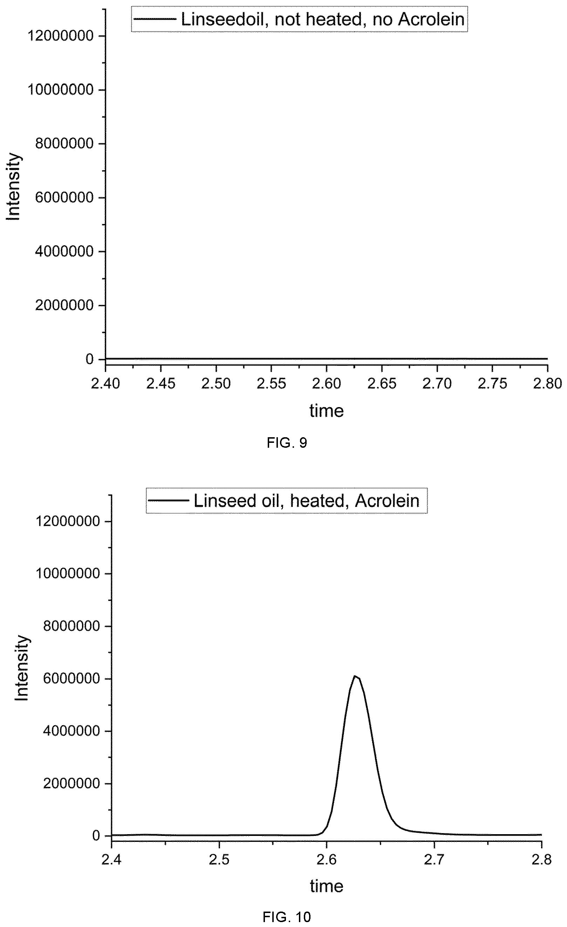

FIG. 9    shows an enlarged excerpt of the signals shown in the plot of FIG. 1 measured between 2.40 to 2.80 min.

FIG. 10    shows an enlarged excerpt of the signals shown in the plot of FIG. 2 measured between 2.40 to 2.80 min. The signal at about 2.63 min was identified as acrolein.

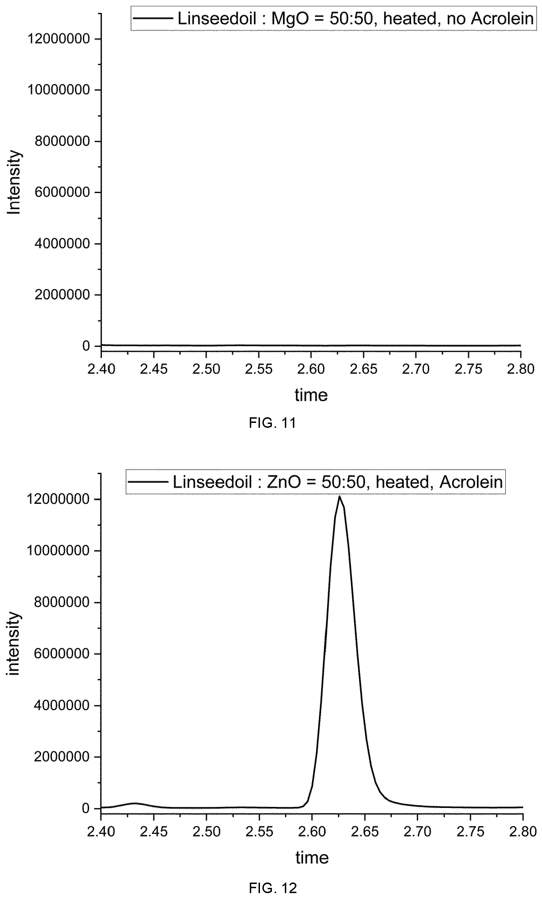

FIG. 11    shows an enlarged excerpt of the signals shown in the plot of FIG. 3 measured between 2.40 to 2.80 min.

FIG. 12    shows an enlarged excerpt of the signals shown in the plot of FIG. 4 measured between 2.40 to 2.80 min. The signal at about 2.63 min was identified as acrolein.

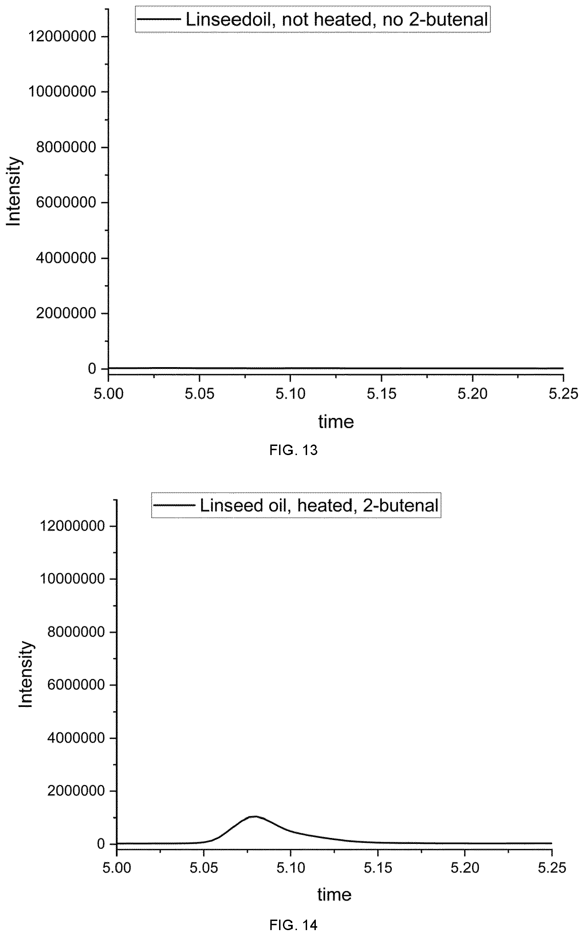

FIG. 13 shows an enlarged excerpt of the signals shown in the plot of FIG. 1 measured between 5.00 to 5.25 min.

FIG. 14 shows an enlarged excerpt of the signals shown in the plot of FIG. 2 measured between 5.00 to 5.25 min. The signal at about 5.75 min was identified as 2-butenal.

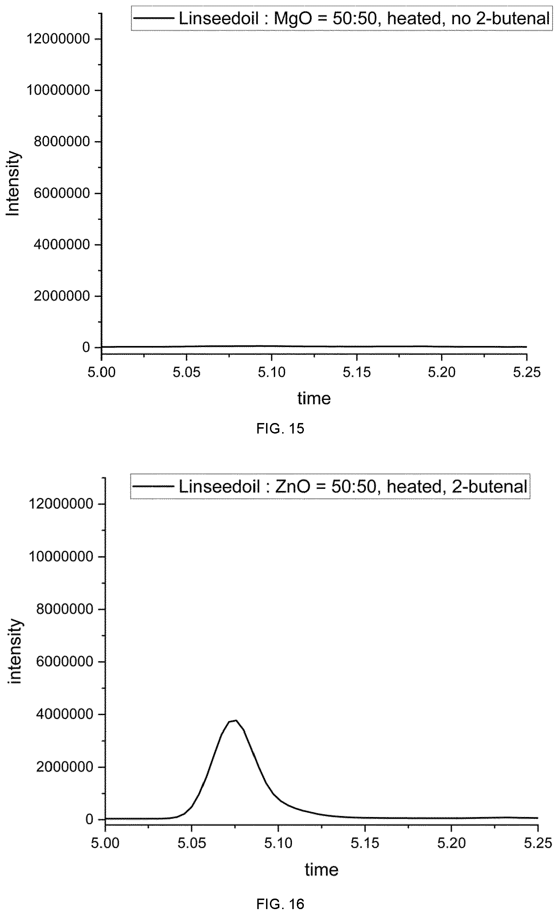

FIG. 15 shows an enlarged excerpt of the signals shown in the plot of FIG. 3 measured between 5.00 to 5.25 min.

FIG. 16 shows an enlarged excerpt of the signals shown in the plot of FIG. 4 measured between 5.00 to 5.25 min. The signal at about 5.75 min was identified as 2-butenal.

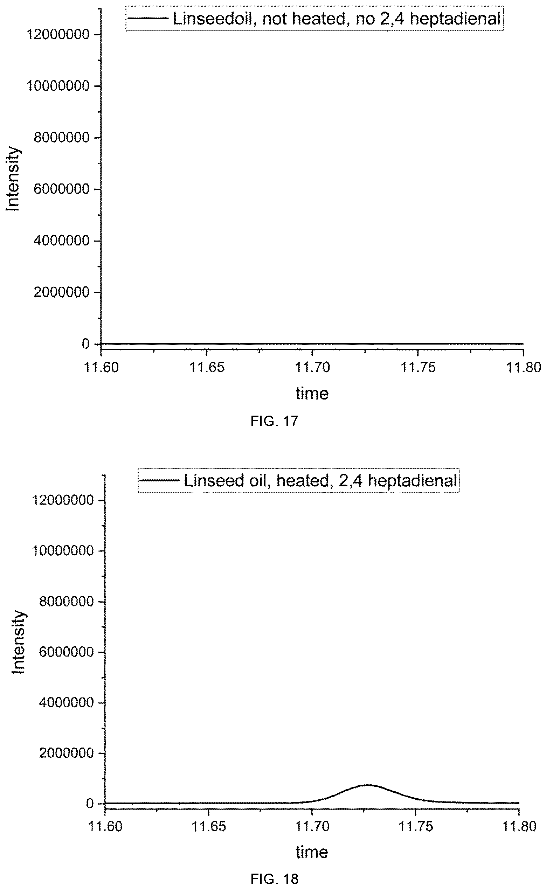

FIG. 17 shows an enlarged excerpt of the signals shown in the plot of FIG. 1 measured between 11.60 to 11.80 min.

FIG. 18 shows an enlarged excerpt of the signals shown in the plot of FIG. 2 measured between 11.60 to 11.80 min. The signal at about 11.72 min was identified as 2,4-heptadienal.

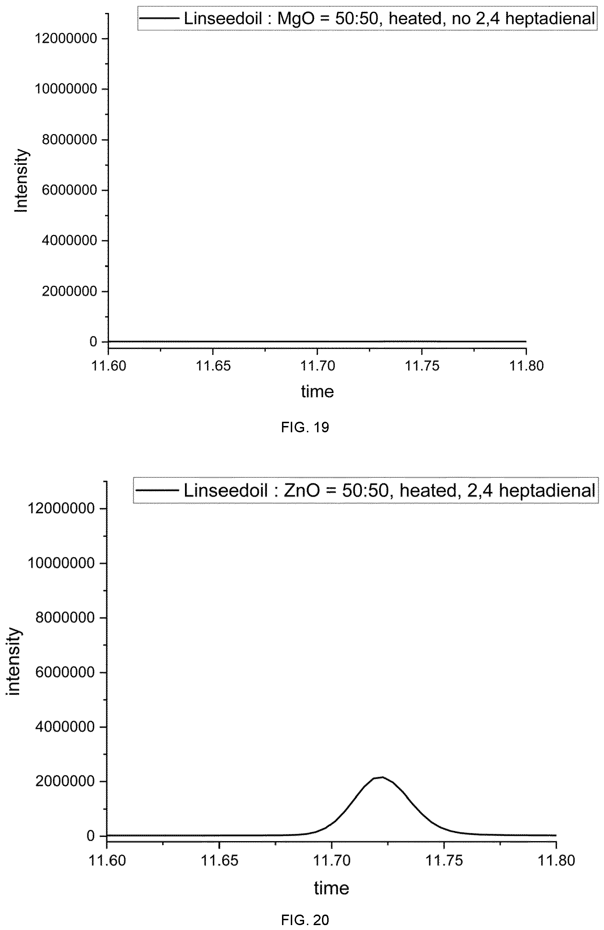

FIG. 19 shows an enlarged excerpt of the signals shown in the plot of FIG. 3 measured between 11.60 to 11.80 min.

FIG. 20 shows an enlarged excerpt of the signals shown in the plot of FIG. 4 measured between 11.60 to 11.80 min. The signal at about 11.72 min was identified as 2,4-heptadienal.

FIG. 21 shows on overlay of an excerpt of different HS-GC plots (signals measured between 2.0 to 3.0 min) as measured for samples of examples IE3 to IE5 and CE2.

FIG. 22 shows on overlay of an excerpt of different HS-GC plots (signals measured between 2.0 to 3.0 min) as measured for samples of examples IE6 to IE8 and CE3.

FIG. 23 shows complete HS-GC plots as measured for samples of examples IE3 to IE5 and CE2. The order of plots from up to down is: IE3, IE4, IE5, CE2. The signal at a retention time of about 1.6 min was identified as acetaldehyde. The signal at a retention time of about 2.35 min was identified as acetone. The signal at a retention time of about 2.6 min was identified as acrolein.

FIG. 24 shows complete HS-GC plots as measured for samples of examples IE6 to IE8 and CE3 and Ref. 3. The order of plots from up to down is: Ref.3, IE6, IE7, IE8, CE3. The signal at a retention time of about 1.6 min was identified as acetaldehyde. The signal at a retention time of about 2.35 min was identified as acetone. The signal at a retention time of about 2.6 min was identified as acrolein.

In the following, the invention is described in more detail.

**DETAILED DESCRIPTION**

**I. Use**

One embodiment of the present invention relates to a use of a basic metal oxide for reducing the formation of one or more decomposition products upon heating of a glycerol fatty acid ester.

The one or more decomposition products may be one or more volatile organic compounds, and preferably one or more volatile organic compounds having a boiling point of below 220°C, like below 200°C.

The one or more decomposition products may be selected from the group consisting of aromatic compounds, aldehydes and ketones, preferably from the group consisting of C6 to C10 aromatic compounds (e.g., benzene), C1 to C12 aldehydes and C3 to C12 ketones, and more preferably from the group consisting of benzene, C1 to C10 aldehydes and C3 to C10 ketones, like from the group consisting of benzene, C2 to C8 aldehydes and C3 to C8 ketones. The C1 to C12 aldehydes (e.g., the C1 to C10 aldehydes or C2 to C8 aldehydes) may be branched or unbranched, saturated or unsaturated C1 to C12 aldehydes (e.g., C1 to C10 aldehydes or C2 to C8 aldehydes). The C3 to C12 ketones (e.g., C3 to C10 ketones or C3 to C8 ketones) may be branched or unbranched, saturated or unsaturated C3 to C12 ketones (e.g., C3 to C10 ketones or C3 to C8 ketones). Preferably, the one or more decomposition products is/are selected from the group consisting of acetaldehyde, acetone, propanal, acrolein, pentanal, butenal, and heptadienal. In one specific embodiment, the one or more decomposition product is benzene.

In one embodiment, the one or more decomposition products is/are selected from the group consisting of aldehydes, preferably from the group consisting of C1 to C12 aldehydes, and more preferably from the group consisting of C1 to C10 aldehydes, like from the group consisting of C2 to C8 aldehydes, like from the group consisting of acetaldehyde, propanal, acrolein, pentanal, butenal, and heptadienal. In one specific embodiment, the one or more decomposition products is/are acrolein and/or acetaldehyde.

In one specific embodiment, the one or more decomposition product is acrolein. In one specific embodiment, the one or more decomposition product is acetaldehyde.

Reducing the formation of one or more aldehydes when heating a glycerol fatty acid ester, like a monoglyceride or a triglyceride, may be particularly advantageous since aldehydes, like acrolein, often make up a large part of the (volatile) decomposition products. In certain embodiments, the use as described herein is suitable for significantly reducing or (almost) completely suppressing the formation of acrolein which is typically one major (volatile) decomposition product of a glycerol fatty acid ester. As such, the reduction of acrolein upon heating of a glycerol fatty acid ester, like a monoglyceride or a triglyceride, can be of particular interest. Thus, one preferred embodiment provides a use of a basic metal oxide for reducing the formation of acrolein upon heating of a glycerol fatty acid ester.

The one or more decomposition products may be one decomposition product (e.g., acetaldehyde, propanal, acrolein, pentanal, butenal, or heptadienal). Alternatively, the one or more decomposition products may be more than one, like two, three, four or a plurality of decomposition products (e.g., selected from the group consisting of aldehydes and ketones as described above).

It is also possible that the one or more decomposition products are defined by the total volatile organic compounds which may be present after heating the glycerol fatty acid ester or a (polymer) composition containing the same. For example, the one or more decomposition products may be defined by the total volatile organic compounds ($VOC_{total}$) as determined by VDA277. The use according to the present invention may be suitable for reducing the total volatile organic compounds ($VOC_{total}$) as determined by VDA277 by at least 10%, and preferably at least 20%, like at least 25%, when compared to heating of the glycerol fatty acid ester under identical conditions with the exception that the basic metal oxide is not used. In one embodiment, the use provides a product which has total volatile organic compounds ($VOC_{total}$) as determined by VDA277 which is reduced by at least 10%, and preferably at least 20%, like at least 25%, when compared to a product which is obtained under the same conditions with the exception that the basic metal oxide is not used. The use may provide a product having a content of total volatile organic compounds ($VOC_{total}$) as determined by VDA277 of below 14000 μgC/g, like below 12000 μgC/g, like in a range of 8000 to 12000 μgC/g.

The glycerol fatty acid ester is not particularly limited and may be a mono-, di- or a triglyceride, or any mixture thereof, i.e. a glycerol fatty acid mono-, di-, or tri-ester, or any mixture thereof. In general, the fatty acid may be a saturated fatty acid or an unsaturated fatty acid. When the glycerol fatty acid ester is a diglyceride or a triglyceride, it may comprise saturated fatty acids, unsaturated fatty acids, or a combination thereof.

The glycerol fatty acid ester may be a monoglyceride, i.e., a glycerol fatty acid monoester. The monoglyceride may be, but is not limited to, a monoester of glycerol and a saturated fatty acid (e.g., a saturated C12-C24 fatty acid, like stearic acid or palmitic acid). The monoglyceride may be present in form of a mixture of different monoglycerides (e.g., a mixture of glycerol monostearate and glycerol monopalmitate). The monoglyceride may be present in combination with a di- or triglyceride (e.g., a minor amount of glycerol distearate). In one preferred embodiment, the glycerol fatty acid ester is glycerol monostearate (e.g., 1-glycerol monostearate and/or 2-glycerol monostearate). The glycerol monostearate may be 1-glycerol monostearate, 2-glycerol monostearate, or a mixture thereof.

The glycerol fatty acid ester may be a triglyceride. Preferably, the triglyceride contains one or more (e.g., one, two or three) esters of a fatty acid selected from the group of monounsaturated fatty acids and polyunsaturated fatty acids. In case the triglyceride does not contain three fatty acids selected from the group of monounsaturated fatty acids and polyunsaturated fatty acids, the remaining fatty acid ester(s) of the triglyceride are typically based on saturated fatty acid(s) as will be understand by those skilled in the art. The polyunsaturated fatty acid may be, for example, α-linolenic acid and/or linoleic acid. The monounsaturated fatty acid may be, but is not limited to, oleic acid. Preferably, the triglyceride contains one or more (e.g., one, two or three) esters of a fatty acid selected from the group of polyunsaturated fatty acids. For example, the triglyceride may contain one or more (e.g., one, two or three) esters of a polyunsaturated fatty acid selected from α-linolenic acid, linoleic acid and a combination thereof. In case the triglyceride does not contain three polyunsaturated fatty acids, it typically contains at least one monounsaturated fatty acid (e.g., oleic acid) or at least one saturated fatty acid (e.g., palmitic acid or stearic acid).

The glycerol fatty acid ester, and particularly the triglyceride, may be part of an oil or a fat (e.g., a vegetable oil). In one preferred embodiment, the glycerol fatty acid ester, and particularly the triglyceride, is provided as part of a vegetable oil. The vegetable oil may be, but is not limited to, linseed oil, sunflower oil, walnut oil, or any mixture thereof. The vegetable oil may have a content of polyunsaturated fatty acids (e.g., α-linolenic acid and/or linoleic acid) of at least 30 wt.%, like at least 40 wt.% or at least 50 wt.%, based on the total weight of the vegetable oil. A vegetable oil having such a content of polyunsaturated fatty acids (e.g., α-linolenic acid and/or linoleic acid) is, for example, linseed oil. In one preferred embodiment, the glycerol fatty acid ester is provided as part of a vegetable oil which is linseed oil, like cold pressed linseed oil.

It is also possible that the glycerol fatty acid ester is linked to a polymer (e.g., a polypropylene) of a polymer composition, e.g., as part of branches in a high melt strength polypropylene. The high melt strength polypropylene may be a high melt strength polypropylene according to an embodiment of the invention.

The basic metal oxide may be selected from the group consisting of lithium oxide, sodium oxide, potassium oxide, magnesium oxide, calcium oxide, strontium oxide, barium oxide, titanium (+II or +III) oxide, chromium (+II or +III) oxide, manganese (+II or +III) oxide, and mixtures thereof. Preferably, the basic metal oxide is selected from the group consisting of basic alkaline oxides and basic earth alkaline oxides. Suitable basic alkaline oxides may be, e.g., lithium oxide, sodium oxide, or potassium oxide. Suitable basic earth alkaline oxides may be magnesium oxide, calcium oxide, strontium oxide and barium oxide. More preferably, the basic metal oxide is selected from the group consisting of basic earth alkaline oxides, and even more preferably the basic metal oxide is calcium oxide, magnesium oxide, or a mixture thereof.

The basic metal oxide may also be part of a chemical compound containing the basic metal oxide. For example, the basic metal oxide may be a magnesium oxide-containing compound.

Most preferably, the basic metal oxide is magnesium oxide (MgO). The magnesium oxide may be, but is not necessarily limited to, a lightly calcined magnesium oxide.

The physical properties of the basic metal oxide are not particularly limited. For example, the basic metal oxide (e.g., MgO) may have a specific surface area, determined according to the BET method, in a range of 100 to 200 $m^2$/g, like in a range of 130 to 180 $m^2$/g. Additionally or alternatively, the basic metal oxide (e.g., MgO) may have a particle size distribution d50 in a range of 2.0 to 8.0 $\mu$m, like in a range of 3.0 to 6.0 $\mu$m, and/or a particle size distribution d90 in a range of 5.0 to 20 $\mu$m, like in a range of 7.5 to 15 $\mu$m. The particle size distribution d50 and d90 may be determined as the volume-based particle size distribution, measured by laser diffraction. The basic metal oxide (e.g., MgO) may also be used in a nanocrystalline form (e.g., a particle size distribution d50 of below 1.0 $\mu$m).

The basic metal oxide and the glycerol fatty acid ester may be combined in a weight ratio in a range of 15:85 to 99:1, and preferably in a range of 25:75 to 98:2. In one embodiment, the basic metal oxide and the glycerol fatty acid ester is combined in a weight ratio in a range of 25:75 to 75:25, like in a range of 35:65 to 65:35. In one embodiment (e.g., when a polymer is present as described in more detail herein below), the basic metal oxide and the glycerol fatty acid ester is combined in a weight ratio in a range of 75:25 to 99:1, like in range of 80:20 to 99:1, in a range of 90:10 to 98:2 or in a 93:7 to 98:2.

When the glycerol fatty acid ester (e.g., triglyceride) is provided as part of an oil or a fat (e.g., a vegetable oil), the basic metal oxide and the oil or the fat (e.g., the vegetable oil) may be combined in a weight ratio in a range of 15:55 to 99:1, and preferably in a range of 25:75 to 98:2. In one embodiment, the basic metal oxide and the oil or the fat (e.g., the vegetable oil) is combined in a weight ratio in a range of 25:75 to 75:25, like in a range of 35:65 to 65:35.

To achieve the effect of reducing the formation of one or more decomposition products, the basic metal oxide is combined (e.g., mixed) with the glycerol fatty acid ester before and/or during heating of the glycerol fatty acid ester. Thus, the use at least comprises the steps of combining the basic metal oxide and the glycerol fatty acid ester, and heating the combination of the basic metal oxide and the glycerol fatty acid ester.

The basic metal oxide may be combined directly with the glycerol fatty acid ester (i.e., the compound as such) or with a composition comprising the glyceryl fatty acid ester, like a polymer composition. The heating is preferably a heating to a temperature of at least 120°C, more preferably at least 150°C, like at least 180°C or in a range of 180 to 260°C. Thus, in one preferred embodiment, the combination of the basic metal oxide and the glycerol fatty acid ester is heated to a temperature of at least 120°C, preferably at least 150°C, more preferably at least 180°C, like in a range of 180 to 260°C. The time of heating is not particularly limited and may be a time period in a range of 1 min to 12 h, like in a range of 1 min to 2 h, like in a range of 1 min to 60 min, like in a range of 1 min to 30 min, like in a range of 1 min to 15 min. The use may comprise one or more additional steps, like a step of cooling a composition obtained after heating the combination of the basic metal oxide and the glycerol fatty acid ester.

The step of combining the basic metal oxide with the glycerol fatty acid ester may be a conventional step, like adding the one compound to the other or vice versa. For example, when the glycerol fatty acid ester (e.g., a triglyceride) is provided as part of a vegetable oil, the basic metal oxide (e.g., MgO) may be added to the vegetable oil or vice versa. Optionally, such a step can be followed by a mixing of the combined compounds.

The step of heating may be carried out as part of a process for preparing food. The process for preparing food may be a process for frying foods. Suitable foods for frying are known and include, but are not limited to, potatoes and potato-derived food products (e.g., French fries, chips, etc). For example, the basic metal oxide may be combined with the glycerol fatty acid ester (e.g., a triglyceride being provided as part of a fat or an oil, like a vegetable oil) by any conventional step known in the art, followed by a step of adding a food and a step of heating the food, e.g., frying the food. In such case, the use according to the present invention may also be defined as a use for reducing the formation of one or more decomposition products upon heating of an oil or fat (e.g., a vegetable oil) comprising a glycerol fatty acid ester, and particularly a triglyceride.

In one embodiment, the glycerol fatty acid ester is a triglyceride (e.g., provided as part of a fat or an oil, like a vegetable oil), and the heating is carried out as part of a process for producing food, and preferably as part of a process for frying foods, like potatoes and potato-derived food products. In one more specific embodiment, the glycerol fatty acid ester is a triglyceride (e.g., provided as part of a fat or an oil, like a vegetable oil) and the basic metal oxide is magnesium oxide (or a magnesium oxide-containing compound), and the heating is carried out as part of a process for producing food, and preferably as part of a process for frying foods, like potatoes and potato-derived food products. The (maximum) temperature of the heating may be a conventional temperature for preparing (frying) food, like a temperature at least 120°C, and preferably at least 150°C, like in a range of 150 to 250°C or in a range of 160 to 200°C.

Alternatively, and more preferably, the use may be part of a process for preparing a polymer composition. In said embodiment, the basic metal oxide and the glycerol fatty acid ester are present in combination with at least one polymer (e.g., at least one polypropylene). The polymer composition may be prepared by melt mixing, melt compounding or melt extrusion, for example, in a plastic extruder. Thus, the basic metal oxide may be used in accordance with the invention as part of a process for melt mixing, melt compounding or melt extruding a polymer to obtain polymer composition.

One preferred embodiment of the present invention provides a use of a basic metal oxide for reducing the formation of one or more decomposition products upon heating of a glycerol fatty acid ester in a process for preparing a polymer composition, e.g., by melt mixing, melt compounding or melt extrusion. The polymer composition may be as defined herein, e.g., in section II.1 and its subsections. When using the basic metal oxide in combination with the glycerol fatty acid ester during melt processing a polymer, the formation of one or more decomposition product (e.g., acrolein) upon heating the glycerol fatty acid ester can advantageously be reduced.

The basic metal oxide and the glycerol fatty acid ester may be added in form of additives in any order to the at least one polymer (e.g., at least one polypropylene) before and/or during melt mixing, melt compounding or melt extruding the at least one polymer (e.g., at least one polypropylene). As such, combining and heating of the basic metal oxide and the glycerol fatty acid ester may be carried out at least partially in a simultaneous manner. It is also possible that the glycerol fatty acid ester is provided as part of the at least one polymer (e.g., at least one polypropylene), and the glycerol fatty acid ester is combined with the basic metal oxide by melting the at least one polymer (e.g., in an extruder) and adding the basic metal oxide to the molten polymer, optionally followed by melt mixing, melt compounding or melt extruding. The (maximum) temperature of the heating may be a conventional temperature for melt processing a polymer, like a temperature of at least 120°C, preferably at least 150°C, and more preferably at least 180°C or in a range of 180 to 260°C.

The use of glycerol fatty acid esters as additive for polymers or in the preparation of polymers is known in the art. For example, glycerol fatty acid esters may be used as, for example, lubricants, slip agents, release agents, cross linkers or coupling agents, and the like. The glycerol fatty acid ester may be present in an amount of at most 5 wt.%, like in a range of 0.02 to 5 wt.%, in a range of 0.02 to 3 wt.%, in a range of 0.02 to 1.5 wt.%, based on a total weight of the polymer composition. The basic metal oxide may be present in a weight ratio to the glycerol fatty acid ester in a weight ratio in a range of 75:25 to 99:1, like in range of 80:20 to 99:1, in a range of 90:10 to 98:2 or in a 93:7 to 98:2.

The at least one polymer may be selected from the group consisting of polyolefins (e.g., polypropylenes), polyamides, poly(meth)acrylates, polyterephthalates, polycarbonates, polyoxymethylenes, natural rubbers, styrene butadiene rubbers, and combinations thereof. It is also possible that the polymer is at least partially a recycled polymer derived from plastic waste material. The recycled polymer may comprise the glycerol fatty acid ester. For example, the glycerol fatty acid ester may be an impurity or contaminant of the recycled polymer which originates from a first use cycle of the polymer. In one preferred embodiment, the at least one polymer is at least one polypropylene, which is optionally present in combination with one or more additional polymers.

One embodiment of the present invention relates to a method for reducing the formation of one or more decomposition products upon heating of a glycerol fatty acid ester, the method comprising the steps of:

- combining a basic metal oxide and a glycerol fatty acid ester, and
- heating the combination of the basic metal oxide and the glycerol fatty acid ester.

The embodiments and preferred embodiments of the use of the invention (e.g., its steps, the basic metal oxide, the one or more decomposition products, the glycerol fatty acid ester, its application as part of a process for preparing a polymer composition) also apply and are also disclosed herein in combination with the method of the invention.

Further, non-limiting embodiments of the use according to the invention are described in the following numbered items U1 to U31:

U1 Use of a basic metal oxide for reducing the formation of one or more decomposition products upon heating of a glycerol fatty acid ester.

U2 Use of item U1, wherein the one or more decomposition products are selected from the group consisting of aromatic compounds, aldehydes and ketones, preferably from the group consisting of C6 to C10 aromatic compounds (e.g., benzene), C1 to C12 aldehydes and C3 to C12 ketones, and more preferably from the group consisting of benzene, C1 to C10 aldehydes and C3 to C10 ketones, like from the group consisting of benzene, C2 to C8 aldehydes and C3 to C8 ketones.

U3 Use of item U1, wherein the one or more decomposition products is/are selected from the group consisting of acetaldehyde, acetone, propanal, acrolein, pentanal, butenal, and heptadienal.

U4 Use of item U1, wherein the one or more decomposition products is/are acetaldehyde and/or acrolein.

U5 Use of item U1, wherein the one or more decomposition product is acrolein.

U6 Use of item U1, wherein the one or more decomposition products are defined by the total volatile organic compounds ($VOC_{total}$) as determined by VDA277.

U7 Use of item U6, wherein the total volatile organic compounds ($VOC_{total}$) as determined by VDA277 is reduced by at least 10%, when compared to heating of the glycerol fatty acid ester under identical conditions with the exception that the basic metal oxide is not used.

U8 Use of any one of items U1 to U7, wherein the glycerol fatty acid ester is a glycerol fatty acid monoester.

U9 Use of item U8, wherein the glycerol fatty acid monoester is a monoester of glycerol and a saturated fatty acid (e.g., a saturated C12-C24 fatty acid, like stearic acid or palmitic acid).

U10 Use of item U8, wherein the glycerol fatty acid monoester is glycerol monostearate (e.g., 1-glycerol monostearate and/or 2-glycerol monostearate).

U11 Use of any one of items U1 to U7, wherein the glycerol fatty acid ester is a triglyceride.

U12 Use of item U11, wherein the triglyceride contains one or more (e.g., one, two or three) esters of a fatty acid selected from the group of monounsaturated fatty acids and polyunsaturated fatty acids.

U13 Use of item U11, wherein the triglyceride contains one or more (e.g., one, two or three) esters of a polyunsaturated fatty acid selected from $\alpha$-linolenic acid, linoleic acid and a combination thereof.

U14 Use of any one of item U11 to U14, wherein the triglyceride is present as part of a vegetable oil.

U15 Use of item U14, wherein the vegetable oil is selected from the group of linseed oil, sunflower oil, walnut oil, and any mixture thereof.

U16 Use of item U14, wherein the vegetable oil is linseed oil.

U17 Use of any one of items U1 to U16, wherein the basic metal oxide selected from the group consisting of lithium oxide, sodium oxide, potassium oxide, magnesium oxide, calcium oxide, strontium oxide, barium oxide, titanium (+II or +III) oxide, chromium (+II or +III) oxide, manganese (+II or +III) oxide, and mixtures thereof.

U18 Use of any one of items U1 to U16, wherein the basic metal oxide is selected from the group consisting of basic earth alkaline oxides.

U19 Use of any one of items U1 to U16, wherein the basic metal oxide is magnesium oxide (MgO).

U20 Use of any one of items U1 to U19, wherein the basic metal oxide has a specific surface area, determined according to the BET method, in a range of 100 to 200 $m^2/g$, like in a range of 130 to 180 $m^2/g$.

U21 Use of any one of items U1 to U20, wherein the basic metal oxide has a particle size distribution d50, determined by laser diffraction, in a range of 2.0 to 8.0 $\mu m$, like in a range of 3.0 to 6.0 $\mu m$, and/ or a particle size distribution d90, determined by laser diffraction, in a range of 5.0 to 20 $\mu m$, like in a range of 7.5 to 15 $\mu m$.

U22 Use of any one of items U1 to U21, wherein the basic metal oxide and the glycerol fatty acid ester may be combined in a weight ratio in a range of 15:85 to 99:1, and preferably in a range of 25:75 to 98:2.

U23 Use of item U22, wherein the weight ratio is a range of 25:75 to 75:25, like in a range of 35:65 to 65:35.

U24 Use of item U22, wherein the weight ratio is in a range of 75:25 to 99:1, like in range of 80:20 to 99:1, in a range of 90:10 to 98:2 or in a 93:7 to 98:2.

U25 Use of any one of items U1 to U24, wherein the heating is a heating to a (maximum) temperature of at least 120°C, preferably at least 150°C, like at least 180°C or in a range of 180 to 260°C.

U26 Use of any one of items U1 to U7 and U11 to U25, wherein the heating is carried out as part of a process for preparing food, like a process for frying food.

U27 Use of any one of items U1 to U25, wherein the basic metal oxide and the glycerol fatty acid ester are present in combination with at least one polymer.

U28 Use of any one of items U1 to U25 and U27, wherein the heating is carried out as part of a process for preparing a polymer composition, for example, by melt mixing, melt compounding or melt extruding.

U29 Use of any one of items U1 to U25, U27 and U28, wherein the glycerol fatty acid ester is present in an amount of at most 5 wt.%, like in a range of 0.02 to 5 wt.%, in a range of 0.02 to 3 wt.%, in a range of 0.02 to 1.5 wt.%, based on a total weight of the polymer composition.

U30 Use of any one of items U1 to U25 and U27 to U29, wherein the at least one polymer is selected from the group consisting of polyolefins (e.g., polypropylenes), polyamides, poly(meth)acrylates, polyterephthalates, polycarbonates, polyoxymethylenes, natural rubbers, styrene butadiene rubbers, and combinations thereof, and preferably wherein the at least polymer is at least one polypropylene which is optionally present in combination with one or more additional polymers.

U31 Use of any one of items U28, wherein the polymer composition is a polymer composition as defined herein, e.g., in any one of items A1 to A29 and H1 to H21.

## II. Composition

Another aspect of the present invention provides a composition comprising a basic metal oxide and a glycerol fatty acid ester. Preferably, the composition is a polymer composition, e.g., as described herein in the following section II.1 and its subsections. However, the composition may also be a different type of composition, like a composition for preparing food as described herein, e.g., in section II.2.

## II.1 Polymer composition

One embodiment of the present invention provides a polymer composition comprising polypropylene, a basic metal oxide, and a glycerol fatty acid ester.

The basic metal oxide may be selected from the group consisting of lithium oxide, sodium oxide, potassium oxide, magnesium oxide, calcium oxide, strontium oxide, barium oxide, titanium (+II or +III) oxide, chromium (+II or +III) oxide, manganese (+II or +III) oxide, and mixtures thereof. Preferably, the basic metal oxide is selected from the group consisting of basic alkaline oxides and basic earth alkaline oxides, and mixtures thereof. Suitable basic alkaline oxides may be, e.g., lithium oxide, sodium oxide, or potassium oxide. Suitable basic earth alkaline oxides may be magnesium oxide, calcium oxide, strontium oxide and barium oxide. More preferably, the basic metal oxide is selected from the group consisting of basic earth alkaline oxides, and even more preferably the basic metal oxide is calcium oxide, magnesium oxide, or a mixture thereof. The basic metal oxide may also be part of a chemical compound containing the basic metal oxide. For example, the basic metal oxide may be a magnesium oxide-containing compound. Most preferably, the basic metal oxide is magnesium oxide (MgO). The magnesium oxide may be, but is not necessarily limited to, a lightly calcined magnesium oxide.

The physical properties of the basic metal oxide are not particularly limited. For example, the basic metal oxide (e.g., MgO) may have a specific surface area, determined according to the BET method, in a range of 100 to 200 $m^2$/g, like in a range of 130 to 180 $m^2$/g. Additionally or alternatively, the basic metal oxide (e.g., MgO) may have a particle size distribution d50 in a range of 2.0 to 8.0 $\mu$m, like in a range of 3.0 to 6.0 $\mu$m, and/or a particle size distribution d90 in a range of 5.0 to 20 $\mu$m, like in a range of 7.5 to 15 $\mu$m. The particle size distribution d50 and d90 may be determined as the volume-based particle size distribution, measured by laser diffraction. The basic metal oxide (e.g., MgO) may also be used in a nanocrystalline form (e.g., a particle size distribution d50 of below 1.0 $\mu$m). In one general embodiment, the polymer composition comprises from 5 to 98 wt.% of polypropylene, from 1 to 25 wt.% of the basic metal oxide, and from 0.02 to 3 wt.% of the glycerol fatty acid ester, based on a total weight of the polymer composition. The polymer composition typically comprises additional components, for example, in an amount in a range of 0.1 to 80 wt.%. The additional components may be, but are not limited to, additives, mineral fillers, or other polymers which are not polypropylenes. The type of polypropylene, the type of the glycerol fatty acid ester as well as the presence of optional additional components may depend on the application of the polymer composition.

The polymer composition is suitable for different applications. For example, the polymer composition may be a polymer masterbatch, e.g., for preparing an automotive composition, or an automotive composition as such. This alternative is described in more detail herein below in section II.1.1.

Alternatively, the polymer composition may be a polymer compound for making a high melt strength polypropylene by electron beam irradiation or the high melt strength polypropylene as such. This alternative is described in more detail herein below in section II.1.2.

II.1.1 Polymer masterbatch for preparing an automotive composition and automotive composition as such

In one embodiment of the present invention, the polymer composition is a polymer masterbatch. The polymer masterbatch is typically a polymer masterbatch for preparing an automotive composition.

In one embodiment of the present invention, the polymer composition is an automotive composition. An automotive composition is a polymer composition which is useful for making an automotive part, like exterior or interior parts of a vehicle. As will be understood by those of skill in the art, a polymer composition which is useful for making automotive parts may also be used for other applications.

Automotive compositions may be obtained by combining (e.g., by melt blending, melt compounding, and/or melt extruding) a base polymer with a polymer masterbatch. The polymer masterbatch contains functional components and/or additives which are included into the base polymer to modify its properties. Thus, a (final) automotive composition and a polymer masterbatch for making said automotive composition are similar when it comes to their types of components. On the other hand, one or more differences may exist in terms of the weight amounts (e.g., the polymer masterbatch typically has a higher concentration of the functional components) and/or the polymer matrix (e.g., the polymer(s) of the masterbatch may be different to base polymer(s) of the automotive composition).

One embodiment of the present invention provides a polymer composition (like the polymer masterbatch or the automotive composition) comprising

- polypropylene,
- an ethylene-based elastomer,
- a mineral filler,
- the basic metal oxide,
- the glycerol fatty acid ester, and
- one or more optional additives.

The polypropylene is not particularly limited and may be selected from the group pf propylene homopolymers, copolymers of propylene, heterophasic propylene copolymers (HECOs), and mixtures thereof. For example, the polypropylene may be one or more propylene homopolymers (e.g., when the polymer composition is a polymer masterbatch, like a polymer masterbatch as described herein in section 11.1.1.1) or the polypropylene may be a mixture of one or more heterophasic propylene copolymers (HECO) and one or more propylene homopolymers (e.g., when the polymer composition is an automotive composition, like an automotive composition as described herein in II.1.1.2). The type of polypropylene typically depends on the application of the polymer composition. For example, when the polymer composition is a polymer masterbatch for an automotive composition the propylene may be different than the propylene of a (final) automotive composition. This is described in more detail herein below.

The ethylene-based elastomer may be a copolymer of ethylene and an alpha-olefin co-monomer having from 4 to 12 carbon atoms. Preferably, the ethylene-based elastomer is a copolymer of ethylene and an alpha-olefin co-monomer having from 4 to 8 carbon atoms. More preferably, the ethylene-based elastomer is a copolymer of ethylene and 1-octene.

The ethylene-based elastomer may have a density in the range from 850 to 910 $kg/m^3$, preferably in the range of from 855 to 895 $kg/m^3$, more preferably in the range of from 860 to 890 $kg/m^3$, like in a range of 875 to 890 $kg/m^3$. The ethylene-based elastomer may have a melt flow rate ($MFR_2$), determined according to ISO 1133 at 190°C and 2.16 kg, in the range from 0.5 to 30 g/10 min, and preferably in a range of 0.8 to 25 g/10 min, like in a range of 0.8 to 15 g/10 min, 0.8 to 10 g/10 min or 0.8 to 5 g/10 min.

Ethylene-based elastomers as described herein are known in the art as such and are commercially available. For example, one suitable ethylene-based elastomer is the ethylene-octene copolymer available under the tradename "Queo 8203" from Borealis AG. Further suitable ethylene-based elastomers are available under the tradename "Queo" from Borealis AG or under the tradename "Engage" from Dow Chemical Corp. A skilled person is also aware how the ethylene-based elastomers described herein may be prepared. Preparation processes may be, but are not limited to, polymerizing ethylene and 1-octene in the presence of a metallocene catalyst in a gas phase reactor or in a solution polymerization process. For example, the ethylene-octene copolymer available under the tradename "Queo 8203" from Borealis AG is typically obtained in a solution polymerization process using a metallocene catalyst.

The mineral filler may be, but is not necessarily limited to, a phyllosilicate, mica or wollastonite. Preferably, the mineral filler is selected from the group of mica, wollastonite, kaolinite, smectite, montmorillonite and talc. Most preferably, the mineral filler is talc.

As regards the embodiments and preferred embodiments of the basic metal oxide, it is referred to the description, e.g., herein above in section II.1. These embodiments and preferred embodiments also apply to, and are disclosed herein in combination with, the polymer composition as described in section 11.1.1.

In the context of the embodiments described herein in section II.1.1 and its subsections, the glycerol fatty acid ester is preferably a monoglyceride, i.e., a glycerol fatty acid monoester. The monoglyceride may be, but is not limited to, a monoester of glycerol and a saturated fatty acid (e.g., a saturated C12-C24 fatty acid, like stearic acid or palmitic acid). The monoglyceride may be present in form of a mixture of different monoglycerides (e.g., a mixture of glycerol monostearate and glycerol monopalmitate). The monoglyceride may be present in combination with a di- or triglyceride (e.g., a minor amount of glycerol distearate). Most preferably, the glycerol fatty acid ester is glycerol monostearate (e.g., 1-glycerol monostearate and/or 2-glycerol monostearate). The glycerol monostearate may be 1-glycerol monostearate, 2-glycerol monostearate, or a mixture thereof.

The polymer composition typically comprises one or more additives. Typical additives are acid scavengers, antioxidants, colorants, (UV) light stabilisers, plasticizers, slip agents, anti-scratch agents, mold release agents, nucleating agents, dispersing agents, processing aids, lubricants, pigments, compatibilizer, and the like. In one embodiment, the additives are selected from the group consisting of acid scavengers, antioxidants, colorants, (UV) light stabilisers, plasticizers, slip agents, anti-scratch agents, mold release agents, nucleating agents, dispersing agents, processing aids, compatibilizer, lubricants and pigments. Such additives are commercially available and for example described in "Plastic Additives Handbook", 6th edition 2009 of Hans Zweifel (pages 1141 to 1190).

In one preferred embodiment, the polymer composition comprises one or more antioxidants (e.g., a phenol-based antioxidant or a phosphorous-based antioxidant, like a phosphite-based antioxidant), one or more acid scavenger and/or release agent (e.g., a fatty acid salt, like calcium stearate), and optionally one or more colorants.

Additives are often provided in form of an additive masterbatch, i.e., a concentrated form of additives in a carrier material, in particular a polymeric carrier material (e.g., a polypropylene carrier material, like a propylene homopolymer carrier material). Thus, when one or more additives are introduced into or are present in the polymer composition, it may be that the polymer composition contains a polymeric carrier material which is derived from an additive masterbatch. For the present disclosure, the term "additives" also encompasses said polymeric carrier materials. A large variety of commercial additive masterbatches, including masterbatches comprising one or more of the above-described additives, are available in the art. For example, when the polymer composition comprises one or more colorants, the one or more colorants are typically added in form of a color masterbatch. A color masterbatch may be used in an amount in a range of 4 to 8 wt.%, like in 6 wt.%, based on the total weight of the polymer masterbatch.

A skilled person also knows how to prepare an additive masterbatch, e.g., by compounding a carrier polymer with one or more additives of choice. Additive masterbatches are also commercially available.

In one preferred embodiment, the polymer composition (e.g., a polymer masterbatch for preparing an automotive composition or an automotive composition) comprises

- polypropylene,
- an ethylene-based elastomer, wherein the ethylene-based elastomer is a copolymer of ethylene and an alpha-olefin co-monomer having from 4 to 12 carbon atoms, and preferably from 4 to 8 carbons, like 8 carbons, and optionally has:
- a density in the range from 850 to 910 kg/m$^3$, preferably in the range of from 855 to 895 kg/m$^3$, more preferably in the range of from 860 to 890 kg/m$^3$, like in a range of 875 to 890 kg/m$^3$, and
- a melt flow rate (MFR$_2$), determined according to ISO 1133 at 190°C and 2.16 kg, in the range from 0.5 to 30 g/10 min, and preferably in a range of 0.8 to 25 g/10 min, like in a range of 0.8 to 15 g/10 min, 0.8 to 10 g/10 min or 0.8 to 5 g/10 min;
- a mineral filler, wherein the mineral filler is selected from the group of mica, wollastonite, kaolinite, smectite, montmorillonite and talc, and preferably is talc;
- the basic metal oxide, wherein the basic metal oxide selected from the group consisting of basic alkaline oxides and basic earth alkaline oxides, and mixtures thereof, and preferably is MgO;
- the glycerol fatty acid ester, wherein the glycerol fatty acid ester is a monoglyceride, and preferably a monoester of glycerol and a saturated fatty acid, like a monoester of glycerol and a saturated C12-C24 fatty acid, e.g., glycerol mono stearate;
- one or more optional additives, wherein the one or more optional additives comprise one or more antioxidants, optionally in combination with one or more additional additives (like one or more release agents and/or one or more colorants).

In one preferred embodiment, the polymer composition (e.g., a polymer masterbatch for preparing an automotive composition or an automotive composition) comprises

- polypropylene,
- an ethylene-based elastomer, wherein the ethylene-based elastomer is a copolymer of ethylene and 1-octene, and optionally has:
- a density in the range from 850 to 910 kg/m$^3$, preferably in the range of from 855 to 895 kg/m$^3$, more preferably in the range of from 860 to 890 kg/m$^3$, like in a range of 875 to 890 kg/m$^3$, and
- a melt flow rate (MFR$_2$), determined according to ISO 1133 at 190°C and 2.16 kg, in the range from 0.5 to 30 g/10 min, and preferably in a range of 0.8 to 25 g/10 min, like in a range of 0.8 to 15 g/10 min, 0.8 to 10 g/10 min or 0.8 to 5 g/10 min;
- a mineral filler, wherein the mineral filler is talc;
- the basic metal oxide, wherein the basic metal oxide is MgO;
- the glycerol fatty acid ester, wherein the glycerol fatty acid ester is a monoester of glycerol and a saturated C12-C24 fatty acid, and preferably glycerol monostearate;
- one or more optional additives, wherein the one or more optional additives comprise one or more antioxidants, optionally in combination with one or more additional additives (like one or more release agents and/or one or more colorants).

The polymer composition may comprise (or essentially consist of or consist of), based on the total weight of the polymer composition,

- from 5.0 to 90 wt.%, preferably from 7.5 to 85 wt.%, like from 10 to 80 wt.%, of polypropylene,
- from 2.0 to 40 wt.%, preferably from 4.0 to 35 wt.%, like from 5.0 to 32 wt.%, of the ethylene-based copolymer,
- from 4.0 to 60 wt.%, preferably from 6.0 to 55 wt.%, like from 8.0 to 50 wt.%, of the mineral filler,
- from 0.5 to 25 wt.%, preferably from 1.0 to 25 wt.%, like from 2.0 to 20 wt.%, of the basic metal oxide,
- from 0.02 to 5.0 wt.%, preferably from 0.02 to 3.0 wt.% like from 0.02 to 2.0 wt.%, of the glycerol fatty acid ester, and
- optionally from 0.05 to 10.0 wt.%, like from 0.1 to 8.0 wt.%, like from 0.2 to 4.0 wt.%, of the one or more additives (e.g., including one or more antioxidants and one or more release agents, optionally in combination with one or more colorants).

The components may be selected to sum up to a total amount of 100 wt.%. The one or more additives are typically present in the polymer masterbatch. When the one or more additives are present, the weight amount of the one or more additives may replace a corresponding weight amount of the polypropylene, as will be understood by those skilled in the art.

II.1.1.1 Polymer masterbatch

The polymer composition may be a polymer masterbatch. The polymer masterbatch may be used for preparing an automotive composition (but is not necessarily limited to that use). The polymer masterbatch typically contains a comparatively high amount of the mineral filler, the basic metal oxide and the ethylene based-copolymer dispersed in the polypropylene (e.g., a propylene homopolymer) as a matrix polymer (together with the glycerol fatty acid ester and optionally the one or more additives, like antioxidant(s), colorants in form of a color masterbatch, etc.). Additional components may be present in the polymer masterbatch but are not necessary.

The polymer masterbatch may comprise (or essentially consist of or consist of), based on the total weight of the polymer masterbatch,

- from 5.0 to 30 wt.%, preferably from 7.5 to 25 wt.%, more preferably from 10 to 20 wt.%, like from 12 to 18 wt.%, of polypropylene,
- from 15 to 40 wt.%, preferably from 17 to 35 wt.%, more preferably from 20 to 32 wt.%, like from 22 to 20 wt.%, of the ethylene-based elastomer,
- from 30 to 60 wt.%, preferably from 35 to 55 wt.%, more preferably from 40 to 50 wt.%, like from 43 to 48 wt.%, of the mineral filler,
- from 1.0 to 25 wt.%, preferably from 2.5 to 25 wt.%, more preferably from 4.0 to 20 wt.%, like from 6.0 to 18 wt.%, 8.0 to 18 wt.% or 12.0 to 18 wt.%, of the basic metal oxide,
- from 0.2 to 5.0 wt.%, preferably from 0.4 to 3.0 wt.% more preferably from 0.6 to 2.0 wt.%, like from 0.6 to 1.6 or 0.6 to 1.2 wt.%, of the glycerol fatty acid ester, and
- optionally from 0.05 to 10.0 wt.%, like from 0.1 to 8.0 wt.%, like from 0.2 to 6.0 wt.%, like from 0.2 to 4.0 wt.%, of one or more additives (e.g., including one or more antioxidants and one or more release agents, optionally in combination with one or more colorants).

The components may be selected to sum up to a total amount of 100 wt.%. The one or more additives are typically present in the polymer masterbatch. When the one or more additives are present, the weight amount of the one or more additional additives may replace a corresponding weight amount of the polypropylene, as will be understood by those skilled in the art. For example, the polymer composition may comprise up to 10 wt.% of additives (based on the polymer composition) of which 6 wt.% (based on the polymer composition) may be a color masterbatch comprising one or more colorants. When the polymer composition comprises up to 10 wt.% of additives, the additives replace an equivalent amount of polypropylene.

The polypropylene is not particularly limited and may be selected from the group pf propylene homopolymers, copolymers of propylene, heterophasic propylene copolymers (HECOs), and mixtures thereof. The polypropylene may be a propylene homopolymer. The polypropylene typically has a comparatively high melt flow. For example, the polypropylene (e.g., the propylene homopolymer) may have a melt flow rate ($MFR_2$), determined according to ISO 1133 at 230°C and 2.16 kg, of at least 80 g/10 min, at least 120 g/10 min, at least 300 g/10 min, at least 500 g/10 or at least 700 g/10 min. A reasonable upper limit of the melt flow rate may be 1000 g/10 min, determined according to ISO 1133 at 230°C and 2.16 kg. In one embodiment, the polypropylene is a propylene homopolymer having a melt flow rate ($MFR_2$), determined according to ISO 1133 at 230°C and 2.16 kg, of at least 300 g/10 min or at least 500 g/10 min, like in a range of 500 to 1000 g/10 min.

The polypropylene (e.g., the propylene homopolymer) may be present in combination with a polypropylene (e.g., a propylene homopolymer) which is derived from a polymer carrier material of an additive masterbatch (e.g., as described in this section in connection with the additives).

Embodiments and preferred embodiments of the ethylene-based elastomer, the mineral filler, the basic metal oxide, the glycerol fatty acid ester, and the one or more additives are as described, e.g., in sections II.1 and II.1.1. These embodiments and preferred embodiments also apply to, and are disclosed herein in combination with, the polymer masterbatch.

The one or more additives are typically present in the polymer masterbatch. In one embodiment, the one or more additives comprise (or may essentially consist of or consist of), based on the total weight of the polymer masterbatch,

- from 0.02 to 1.0 wt.% (e.g., 0.02 to 0.5 wt.% or 0.02 to 0.2 wt.%) of one or more antioxidants,
- from 0.1 to 1.0 wt.% (e.g., 0.1 to 0,8 wt.% or 0.2 to 0,6 wt.%) of one or more acid scavenger and/or release agents,
- optionally from 0.5 to 3.0 wt.% (e.g., 1.0 to 2.0 wt.% or 1.2 to 1.8 wt.%) of a polymer carrier material.

In one embodiment, the one or more additives comprise (or may essentially consist of or consist of), based on the total weight of the polymer masterbatch,

- from 0.02 to 1.0 wt.% (e.g., 0.02 to 0.5 wt.% or 0.02 to 0.2 wt.%) of one or more antioxidants,

- from 0.1 to 1.0 wt.% (e.g., 0.1 to 0,8 wt.% or 0.2 to 0,6 wt.%) of one or more acid scavenger and/or release agents,
- optionally from 0.5 to 3.0 wt.% (e.g., 1.0 to 2.0 wt.% or 1.2 to 1.8 wt.%) of a polymer carrier material, and
- optionally from 4.0 to 8.0 wt.% (e.g., about 6 wt.%) of a color masterbatch.

The polymer carrier material may be a propylene homopolymer, e.g., having a melt flow rate ($MFR_2$), determined according to ISO 1133 at 230°C and 2.16 kg, of equal or less than 5 g/10 min (e.g., 0.1 to 5 g/10 min) or equal or less than 3 g/10 min (e.g., 0.1 to 3 g/10 min).

II.1.1.2 Automotive composition

The polymer composition may be an automotive composition, i.e., a polymer composition which is suitable for making an automotive part. The automotive composition may be used for making exterior or interior parts of a vehicle, preferably interior parts. Other applications of the automotive composition are also possible including applications outside the automotive sector.

The automotive composition may comprise a heterophasic propylene copolymer (HECO) and the components of the polymer masterbatch according to an embodiment of the invention. Hence, one embodiment of the present invention provides an automotive composition comprising a heterophasic propylene copolymer (HECO) and a polymer masterbatch according to an embodiment of the invention. The automotive composition may be obtained by melt mixing (e.g., melt compounding or melt extruding) at least a heterophasic propylene copolymer (HECO) and the polymer masterbatch as described herein. Additional components may be present in the automotive composition as well.

The automotive composition may comprise (essentially consist of or consist of):

- from 50 to 90 wt.%, preferably from 55 to 85 wt.%, more preferably from 60 to 80 wt.%, like from 65 to 75 wt.%, of a heterophasic propylene copolymer (HECO),
- from 10 to 50 wt.%, preferably from 15 to 45 wt.%, and more preferably from 20 to 40 wt.%, like from 25 to 35 wt.%, of the polymer masterbatch according to an embodiment of the invention,
- optionally from 0.1 to 5.0 wt.%, like from 0.1 to 4.0 wt.%, from 0.1 to 3.0 wt.%, from 0.1 to 2.0 wt.% or 0.1 to 1.0 wt.%, of one or more additional additives.

The components may be selected to sum up to a total amount of 100 wt.%. The one or more additional additives are typically present in the automotive composition. When the one or more additional additives are present, the weight amount of the one or more additional additives may replace a corresponding weight amount of the heterophasic propylene copolymer (HECO), as will be understood by those skilled in the art.

The one or more additional additives may be the same or different than the one or more additives which are optionally present in the polymer masterbatch. The one or more additional additives may be, but are not necessarily limited to, acid scavengers, antioxidants, colorants, (UV) light stabilisers, plasticizers, slip agents, anti-scratch agents, mold release agents, nucleating agents, dispersing agents, processing aids, lubricants, pigments, compatibilizer, and the like. For example, the one or more additional additives may comprise one or more antioxidants and/or one or more acid scavenger and/or release agent, optionally in combination with one or more further additives. The one or more additional additives may be derived from the heterophasic propylene copolymer (HECO), e.g., as part of an additive masterbatch for stabilising the heterophasic propylene copolymer (HECO).

The heterophasic propylene copolymer (HECO) may be one or more heterophasic propylene copolymers. Thus, the heterophasic propylene copolymer (HECO) may be one heterophasic propylene copolymer or two or more (e.g., two) different heterophasic propylene copolymers.

The automotive composition is not necessarily limited in that it is to be obtained using the polymer masterbatch according to an embodiment of the invention. In principle, it is possible to directly prepare the automotive composition without pre-combining certain components as part of a polymer masterbatch as described herein.

The automotive composition may comprise (essentially consist of or consist of):

- from 50 to 90 wt.%, preferably from 55 to 85 wt.%, more preferably from 60 to 80 wt.%, like from 65 to 75 wt.%, of a heterophasic propylene copolymer (HECO),
- from 1.0 to 12 wt.%, preferably from 2.0 to 10 wt.%, more preferably from 2.0 to 8.0 wt.%, like from 3.0 to 6.0 wt.%, of a polypropylene being different to the heterophasic propylene copolymer (HECO),
- from 2.0 to 16 wt.%, preferably from 4.0 to 14 wt.%, more preferably from 5.0 to 12 wt.%, like from 6.0 to 10 wt.%, of the ethylene-based elastomer,
- from 4.0 to 30 wt.%, preferably from 6.0 to 25 wt.%, more preferably from 8.0 to 20 wt.%, like from 10 to 16 wt.%, of the mineral filler,
- from 0.5 to 10 wt.%, preferably from 1.0 to 8.0 wt.%, like from 1.0 to 7.0 wt.%, from 2.0 to 8.0 wt.% or from 3.0 to 7.0 wt.%, of the basic metal oxide,

- from 0.02 to 2.0 wt.%, preferably from 0.02 to 1.0 wt.% more preferably from 0.02 to 0.5 wt.%, like from 0.04 to 0.2 wt.% or from 0.04 to 0.1 wt.%, of the glycerol fatty acid ester, and
- optionally from 0.05 to 7.5 wt.%, like from 0.1 to 5.0 wt.%, like from 0.2 to 4.0 wt.%, like from 0.2 to 3.0 wt.%, of one or more additives.

The components may be selected to sum up to a total amount of 100 wt.%. The one or more additives are typically present in the automotive composition. When the one or more additives are present, the weight amount of the one or more additional additives replaces a corresponding weight amount of the heterophasic propylene copolymer (HECO), as will be understood by those skilled in the art.

The polypropylene being different to the heterophasic propylene copolymer (HECO) is not particularly limited and may be selected from the group pf propylene homopolymers, copolymers of propylene, other heterophasic propylene copolymers (HECOs), and mixtures thereof. In one preferred embodiment, the polypropylene is a propylene homopolymer, optionally having a melt flow rate ($MFR_2$), determined according to ISO 1133 at 230°C and 2.16 kg, of at least 80 g/10 min, at least 120 g/10 min, at least 300 g/10 min, at least 500 g/10 or at least 700 g/10 min. A reasonable upper limit of the melt flow rate may be 1000 g/10 min, determined according to ISO 1133 at 230°C and 2.16 kg. In one more preferred embodiment, the polypropylene is a propylene homopolymer having a melt flow rate ($MFR_2$), determined according to ISO 1133 at 230°C and 2.16 kg, of at least 300 g/10 min or at least 500 g/10, like in a range of 500 to 1000 g/10 min.

Embodiments and preferred embodiments of the ethylene-based elastomer, of the mineral filler, of the basic metal oxide, of the glycerol fatty acid ester, and of the one or more additives are as described herein in section II.1 and II.1.1.These embodiments and preferred embodiments also apply to, and are disclosed herein in combination with, the automotive composition.

In the following, the heterophasic propylene copolymer (HECO) is described in more detail:
The heterophasic propylene copolymer (HECO) typically comprises: i) a crystalline matrix phase; and ii) an elastomeric phase being dispersed in said matrix phase. Typically, the heterophasic propylene copolymer (HECO) is a heterophasic ethylene-propylene copolymer. In such case, the heterophasic ethylene-propylene copolymer typically comprises a crystalline matrix phase and an elastomeric phase being dispersed in said matrix phase. Said crystalline matrix phase may be a propylene homopolymer or a random copolymer of propylene and ethylene. Said elastomeric phase is typically a propylene-ethylene copolymer with a high amount of ethylene comonomer that is not randomly distributed in the polymer chain but is distributed in a comonomer-rich block structure and a propylene-rich block structure.

The heterophasic propylene copolymer (HECO) preferably has a melt flow rate ($MFR_2$), determined according to ISO 1133 at 230°C and 2.16 kg, in the range from 4 to 30 g/10 min. More preferably, the second heterophasic propylene-ethylene copolymer (HECO2) has a melt flow rate ($MFR_2$), determined according to ISO 1133 at 230°C and 2.16 kg, in the range from 5 to 25 g/10 min, like in range of 5 to 20 g/min or in a range of 10 to 20 g/min.

The heterophasic propylene copolymer (HECO) may have a melting temperature Tm, determined by differential scanning calorimetry (DSC), in the range of from 150 to 170°C, preferably 155 to 168°C, and more preferably 162 to 168°C.

The heterophasic propylene copolymer (HECO) may be further defined by specific characteristics that are determined according to CRYSTEX QC analysis, preferably using trichlorobenzene as solvent. This measuring method is further described below in section "Measuring methods". CRYSTEX QC analysis is suitable to determine a crystalline fraction (CF) and a soluble fraction (SF) of the heterophasic propylene copolymer (HECO). The crystalline fraction (CF) contains for the most part the matrix phase and only a small part of the elastomeric phase and the soluble fraction (SF) contains for the most part the elastomeric phase and only a small part of the matrix phase. Due to the differences in the separation methods of cold xylene extraction and the CRYSTEX QC method the properties of XCS/XCI fractions on the one hand and crystalline/soluble (CF/SF) fractions on the other hand are typically not exactly the same, meaning that the amounts of matrix phase and elastomeric phase can differ as well as the properties.

The heterophasic propylene copolymer (HECO) may have an ethylene content (C2(total)), determined by FT-IR spectroscopy calibrated by quantitative $^{13}$C-NMR spectroscopy, in the range from 5.0 to 25.0 wt.%, preferably in the range from 6.0 to 22.0 wt.%, like in the range from 12.0 to 22.0 wt.% or 15.0 to 22.0 wt.%, relative to the total weight of the heterophasic propylene copolymer (HECO).

The heterophasic propylene copolymer (HECO) may have a soluble fraction (SF) content, determined according to CRYSTEX QC analysis, in the range from 17.0 to 40.0 wt.%, relative to the total weight of the heterophasic propylene copolymer (HECO). Preferably, the heterophasic propylene copolymer (HECO) has a soluble fraction (SF) content, determined according to CRYSTEX QC analysis, in the range from 18.0 to 38.0 wt.%, preferably 19.0 to 35.0 wt.%, like 19.0 to 33.0 wt.% or 25.0 to 35.0 wt.%, relative the total weight of the heterophasic propylene copolymer (HECO).

The intrinsic viscosity, determined according to DIN ISO 1628/1, of the soluble fraction content (iV(SF)), according to CRYSTEX QC analysis, may be in the range from 2.0 to 7.0 dL/g, preferably from 2.5 to 6.8 dL/g, like from 3.0 to 6.0 dL/g or from 3.0 to 5.0 dL/g.

The soluble fraction (SF) may have an ethylene content (C2(SF)), determined by FT-IR spectroscopy calibrated

by quantitative $^{13}$C-NMR spectroscopy, in the range from 20.0 to 50.0 wt.%, preferably in the range from 20.0 to 48.0 wt.%, like in the range from 25.0 to 48.0 wt.% or 30.0 to 48.0 wt.%, relative to the total weight of the soluble fraction (SF) of the total weight of the heterophasic propylene copolymer (HECO).

The heterophasic propylene copolymer (HECO) may have a crystalline fraction (CF) content, determined according to CRYSTEX QC analysis, in the range from 60.0 to 83.0 wt.%, preferably 62.0 to 82.0 wt.%, and more preferably 65.0 to 81.0 wt.%, like 67.0 to 81.0 wt.% or 67.0 to 75 wt.%, relative to the total weight of the heterophasic propylene copolymer (HECO).

The crystalline fraction (CF) may have an ethylene content (C2(CF)), determined by FT-IR spectroscopy calibrated by quantitative $^{13}$C-NMR spectroscopy, in the range from 1.0 to 10.0 wt.%, preferably in the range from 1.5 to 10.0 wt.%, and more preferably in the range from 2.0 to 10.0 wt.%, like from 2.5 to 10.0 wt.% or from 5.0 to 10.0 wt.%, relative to the total weight of the crystalline fraction (CF) of the heterophasic propylene copolymer (HECO).

The intrinsic viscosity, determined according to DIN ISO 1628/1, of the crystalline fraction content (iV(CF)), according to CRYSTEX QC analysis, may be in the range from 1.0 to 3.5 dL/g, preferably 1.1 to 3.0 dL/g, and more preferably 1.2 to 2.5 dL/g, like 1.2 to 2.0 dL/g.

The heterophasic propylene copolymer (HECO) may be characterized by a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, in the range of from 1.2 to 6.0, preferably from 1.5 to 5.0, and more preferably in the range of from 2.0 to 4.0, like in the range of 2.0 to 3.0, the intrinsic viscosity being determined according to DIN ISO 1628/1.

Additionally or alternatively, the heterophasic propylene copolymer (HECO) may be characterized by its xylene cold solubles (XCS) fraction. The heterophasic propylene copolymer (HECO) may have one or both of, preferably both of:

- a xylene cold soluble (XCS) content, determined at 25°C according ISO 16152, in the range of 18.0 to 42.0 wt.%, preferably 19.0 to 40.0 wt.%, and more preferably 20.0 to 36.5 wt.%, like 25.0 to 35.0 wt.% based on the overall weight of the heterophasic propylene copolymer (HECO), and
- an intrinsic viscosity (IV) determined according to DIN ISO 1628/1 in decalin at 135°C of the XCS fraction in the range of from 1.8 to 7.0 dl/g, preferably from 2.0 to 6.6 dl/g, and more preferably from 2.0 to 6.4 dl/g, like from 2.1 to 5.0 dl/g or from 2.1 to 4.2 dl/g.

In one preferred embodiment, the heterophasic propylene copolymer (HECO) has:

- a melt flow rate ($MFR_2$), determined according to ISO 1133 at 230°C and 2.16 kg, in the range from 4 to 30 g/10 min, more preferably in the range from 5 to 25 g/10 min, like in range of 5 to 20 g/min or in a range of 10 to 20 g/min,
- a xylene cold soluble (XCS) content, determined at 25°C according ISO 16152, in the range of 18.0 to 42.0 wt.%, preferably 19.0 to 40.0 wt.%, and more preferably 20.0 to 36.5 wt.%, like 25.0 to 35.0 wt.% based on the overall weight of the heterophasic propylene copolymer (HECO), and
- an intrinsic viscosity (IV) determined according to DIN ISO 1628/1 in decalin at 135°C of the XCS fraction in the range of from 1.8 to 7.0 dl/g, preferably from 2.0 to 6.6 dl/g, and more preferably from 2.0 to 6.4 dl/g, like from 2.1 to 5.0 dl/g or from 2.1 to 4.2 dl/g.

The heterophasic propylene copolymer (HECO) is obtainable by a Ziegler-Natta-catalyst based polymerization process. The Ziegler-Natta-catalyst may be as described in EP0591224 and may be prepolymerized with vinyl-cyclohexane (VCH) as described in EP1028984 and EP1183307. Suitable Ziegler-Natta-catalysts are also commercially available, e.g., in form of the catalyst ZN104 from LyondellBasell. The process is typically carried in a sequential polymerization reactor, like a loop reactor connected to two or more gas phase reactors. An example for such a process is described in detail herein below in the section "Experimental section". The heterophasic propylene copolymer (HECO) as described herein is a material that is known in the art and commercially available.

Further, non-limiting embodiments of the polymer composition of the invention, particularly the polymer composition described herein in section II.1.1, are described in the following list of numbered items A1 to A29:

A1 A polymer composition comprising

- polypropylene,
- an ethylene-based elastomer,
- a mineral filler,
- the basic metal oxide,
- the glycerol fatty acid ester, and
- one or more optional additives.

A2 The polymer composition of item A1, wherein the polypropylene is one or more propylene homopolymers or a mixture of one or more heterophasic propylene copolymers (HECO) with one or more propylene homopolymers.

A3 The polymer composition of item A1 or A2, wherein the ethylene-based elastomer is a copolymer of ethylene and an alpha-olefin co-monomer having from 4 to 12 carbon atoms, preferably from 4 to 8 carbon atoms, and more preferably is a copolymer of ethylene and 1-octene.

A4 The polymer composition of any one of items A1 to A3, wherein the ethylene-based elastomer has a density in the range from 850 to 910 kg/m$^3$, preferably in the range of from 855 to 895 kg/m$^3$, more preferably in the range of from 860 to 890 kg/m$^3$, like in a range of 875 to 890 kg/m$^3$, and a melt flow rate (MFR$_2$), determined according to ISO 1133 at 190°C and 2.16 kg, in the range from 0.5 to 30 g/10 min, and preferably in a range of 0.8 to 25 g/10 min, like in a range of 0.8 to 15 g/10 min, 0.8 to 10 g/10 min or 0.8 to 5 g/10 min.

A5 The polymer composition of any one of items A1 to A4, wherein the mineral filler is phyllosilicate, mica or wollastonite, and preferably is selected from the group of mica, wollastonite, kaolinite, smectite, montmorillonite and talc, and most preferably is talc.

A6 The polymer composition of any one of items A1 to A5, wherein the basic metal oxide selected from the group consisting of lithium oxide, sodium oxide, potassium oxide, magnesium oxide, calcium oxide, strontium oxide, barium oxide, titanium (+II or +III) oxide, chromium (+II or +III) oxide, manganese (+II or +III) oxide, and mixtures thereof.

A7 The polymer composition of any one of items A1 to A5, wherein the basic metal oxide is selected from the group consisting of basic earth alkaline oxides.

A8 The polymer composition of any one of items A1 to A5, wherein the basic metal oxide is magnesium oxide (MgO).

A9 The polymer composition of any one of items A1 to A8, wherein the basic metal oxide has a specific surface area, determined according to the BET method, in a range of 100 to 200 m$^2$/g, like in a range of 130 to 180 m$^2$/g.

A10 The polymer composition of any one of items A1 to A9, wherein the basic metal oxide has a particle size distribution d50, determined by laser diffraction, in a range of 2.0 to 8.0 $\mu$m, like in a range of 3.0 to 6.0 $\mu$m, and/ or a particle size distribution d90, determined by laser diffraction, in a range of 5.0 to 20 $\mu$m, like in a range of 7.5 to 15 $\mu$m.

A11 The polymer composition of any one of items A1 to A10, wherein the glycerol fatty acid ester is a glycerol fatty acid monoester, preferably a monoester of glycerol and a saturated fatty acid, like a monoester of glycerol and a saturated C12-C24 fatty acid, like stearic acid or palmitic acid).

A12 The polymer composition of any one of items A1 to A11, wherein the glycerol fatty acid ester is glycerol monostearate (e.g., 1-glycerol monostearate and/or 2-glycerol monostearate).

A13 The polymer composition of any one of items A1 to A12, wherein the one or more additives are present, and optionally wherein the one or more additives comprise at least one or more one or more antioxidants and one or more acid scavenger and/or release agent, optionally in combination with one or more additional additives (like one or more colorants).

A14 The polymer composition of any one of items A1 to A13, wherein the ethylene-based elastomer is a copolymer of ethylene and 1-octene, the mineral filler is talc, the basic metal oxide is MgO, the glycerol fatty acid ester is glycerol mono stearate.

A15 The polymer composition of any one of items A1 to A14, comprising (or essentially consisting of or consisting of), based on the total weight of the polymer composition,

- from 5.0 to 90 wt.%, preferably from 7.5 to 85 wt.%, like from 10 to 80 wt.%, of polypropylene,
- from 2.0 to 40 wt.%, preferably from 4.0 to 35 wt.%, like from 5.0 to 32 wt.%, of the ethylene-based copolymer,
- from 4.0 to 60 wt.%, preferably from 6.0 to 55 wt.%, like from 8.0 to 50 wt.%, of the mineral filler,
- from 0.5 to 25 wt.%, preferably from 1.0 to 25 wt.%, like from 2.0 to 20 wt.%, of the basic metal oxide,
- from 0.02 to 5.0 wt.%, preferably from 0.02 to 3.0 wt.% like from 0.02 to 2.0 wt.%, of the glycerol fatty acid ester, and
- optionally from 0.05 to 10.0 wt.%, preferably from 0.1 to 8.0 wt.%, like from 0.2 to 4.0 wt.%, of the one or more additives.

A16 The polymer composition of any one of items A1 to A15, being a polymer masterbatch for preparing an automotive composition.

A17 The polymer composition of any one of items A1 to A16, comprising (or essentially consisting of or consisting of), based on the total weight of the polymer composition,

- from 5.0 to 30 wt.%, preferably from 7.5 to 25 wt.%, more preferably from 10 to 20 wt.%, like from 12 to 18 wt.%, of polypropylene,

- from 15 to 40 wt.%, preferably from 17 to 35 wt.%, more preferably from 20 to 32 wt.%, like from 22 to 20 wt.%, of the ethylene-based elastomer,

- from 30 to 60 wt.%, preferably from 35 to 55 wt.%, more preferably from 40 to 50 wt.%, like from 43 to 48 wt.%, of the mineral filler,

- from 1.0 to 25 wt.%, preferably from 2.5 to 25 wt.%, more preferably from 4.0 to 20 wt.%, like from 6.0 to 18 wt.%, 8.0 to 18 wt.% or 12.0 to 18 wt.%, of the basic metal oxide,
- from 0.2 to 5.0 wt.%, preferably from 0.4 to 3.0 wt.% more preferably from 0.6 to 2.0 wt.%, like from 0.6 to 1.6 or 0.6 to 1.2 wt.%, of the glycerol fatty acid ester, and
- optionally from 0.05 to 10.0 wt.%, like from 0.1 to 8.0 wt.%, like from 0.2 to 6.0 wt.%, like from 0.2 to 4.0 wt.%, of one or more additives.

A18 The polymer composition of item A16 or A17, wherein the polypropylene is a propylene homopolymer, preferably having a melt flow rate (MFR$_2$), of at least 300 g/10 min or at least 500 g/10, like in a range of 500 to 1000 g/10 min.

A19 The polymer composition of any one of items A1 to A15, being an automotive composition, and preferably an automotive interior composition.

A20 The polymer composition of item A19, comprising (essentially consisting of or consisting of):

- from 50 to 90 wt.%, preferably from 55 to 85 wt.%, more preferably from 60 to 80 wt.%, like from 65 to 75 wt.%, of a heterophasic propylene copolymer (HECO),
- from 10 to 50 wt.%, preferably from 15 to 45 wt.%, and more preferably from 20 to 40 wt.%, like from 25 to 35 wt.%, of the polymer masterbatch of any one of item A16 to A18,
- optionally from 0.1 to 5.0 wt.%, like from 0.1 to 4.0 wt.%, 0.1 to 3.0 wt.%, 0.1 to 2,0 wt.% or 0.1 to 1.0 wt.%, of one or more additional additives.

A21 The polymer composition of any one of items A1 to A15 and A19, comprising (or essentially consisting of or consisting of):

- from 50 to 90 wt.%, preferably from 55 to 85 wt.%, more preferably from 60 to 80 wt.%, like from 65 to 75 wt.%, of a heterophasic propylene copolymer (HECO),
- from 1.0 to 12 wt.%, preferably from 2.0 to 10 wt.%, more preferably from 2.0 to 8.0 wt.%, like from 3.0 to 6.0 wt.%, of a polypropylene being different to the heterophasic propylene copolymer (HECO),
- from 2.0 to 16 wt.%, preferably from 4.0 to 14 wt.%, more preferably from 5.0 to 12 wt.%, like from 6.0 to 10 wt.%, of the ethylene-based elastomer,
- from 4.0 to 30 wt.%, preferably from 6.0 to 25 wt.%, more preferably from 8.0 to 20 wt.%, like from 10 to 16 wt.%, of the mineral filler,
- from 0.5 to 10 wt.%, preferably from 1.0 to 8.0 wt.%, like from 1.0 to 7.0 wt.%, from 2.0 to 8.0 wt.% or from 3.0 to 7.0 wt.%, of the basic metal oxide,
- from 0.02 to 2.0 wt.%, preferably from 0.02 to 1.0 wt.% more preferably from 0.02 to 0.5 wt.%, like from 0.04 to 0.2 wt.% or from 0.04 to 0.1 wt.%, of the glycerol fatty acid ester, and
- optionally from 0.05 to 7.5 wt.%, like from 0.1 to 5.0 wt.%, like from 0.2 to 4.0 wt.%, like from 0.2 to 3.0 wt.%, of one or more additives.

A22 The polymer composition of item A21, wherein the polypropylene being different to the heterophasic propylene copolymer (HECO) is a propylene homopolymer.

A23 The polymer composition of A22, wherein the propylene homopolymer has a melt flow rate (MFR$_2$), determined according to ISO 1133 at 230°C and 2.16 kg, of at least 300 g/10 min or at least 500 g/10, like in a range of 500 to 1000 g/10 min.

A24 The polymer composition of any one of items A20 to A23, wherein the heterophasic propylene copolymer (HECO) is a heterophasic ethylene-propylene copolymer.

A25 The polymer composition of any one of items A20 to A24, wherein the heterophasic propylene copolymer (HECO) has a melt flow rate (MFR$_2$), determined according to ISO 1133 at 230°C and 2.16 kg, in the range from 4 to 30 g/10 min, preferably in the range from 5 to 25 g/10 min, like in range of 5 to 20 g/min or in a range of 10 to 20 g/min.

A26 The polymer composition of any one of items A20 to A25, wherein the heterophasic propylene copolymer (HECO) has a melting temperature Tm, determined by differential scanning calorimetry (DSC), in the range of from 150 to 170°C, preferably from 155 to 168°C, and more preferably from 162 to 168°C.

A27 The polymer composition of any one of items A20 to A26, wherein the heterophasic propylene copolymer (HECO) has an ethylene content (C2(total)), determined by FT-IR spectroscopy calibrated by quantitative $^{13}$C-NMR spectroscopy, in the range from 5.0 to 25.0 wt.%, preferably in the range from 6.0 to 22.0 wt.%, like in the range from 12.0 to 22.0 wt.% or 15.0 to 22.0 wt.%, relative to the total weight of the heterophasic propylene copolymer (HECO).

A28 The polymer composition of any one of items A20 to A27, wherein the heterophasic propylene copolymer (HECO) has:

- a soluble fraction (SF) content, determined according to CRYSTEX QC analysis, in the range from 17.0 to 40.0 wt.%, relative to the total weight of the heterophasic propylene copolymer (HECO), preferably in the range from 18.0 to 38.0 wt.%, more preferably 19.0 to 35.0 wt.%, like 19.0 to 33.0 wt.% or 25.0 to 35.0 wt.%;

- an intrinsic viscosity, determined according to DIN ISO 1628/1, of the soluble fraction content (iV(SF)), according to CRYSTEX QC analysis, in the range from 2.0 to 7.0 dL/g, preferably from 2.5 to 6.8 dL/g, like from 3.0 to 6.0 dL/g or from 3.0 to 5.0 dL/g;
- the soluble fraction (SF) has an ethylene content (C2(SF)), determined by FT-IR spectroscopy calibrated by quantitative $^{13}$C-NMR spectroscopy, in the range from 20.0 to 50.0 wt.%, preferably in the range from 20.0 to 48.0 wt.%, like in the range of 25.0 to 48.0 wt.% or 30.0 to 48.0 wt.%, relative to the total weight of the soluble fraction (SF) of the total weight of the heterophasic propylene copolymer (HECO).

A29 The polymer composition of any one of items A20 to A28, wherein the heterophasic propylene copolymer (HECO) has one or both of, preferably both of:

- a xylene cold soluble (XCS) content, determined at 25°C according ISO 16152, in the range of 18.0 to 42.0 wt.%, preferably 19.0 to 40.0 wt.%, and more preferably 20.0 to 36.5 wt.%, like 25.0 to 35.0 wt.% based on the overall weight of the heterophasic propylene copolymer (HECO), and
- an intrinsic viscosity (IV) determined according to DIN ISO 1628/1 in decalin at 135°C of the XCS fraction in the range of from 1.8 to 7.0 dl/g, preferably from 2.0 to 6.6 dl/g, and more preferably from 2.0 to 6.4 dl/g, like from 2.1 to 5.0 dl/g or from 2.1 to 4.2 dl/g.

II.1.2 Polymer compound for preparing a high melt strength polypropylene and the high melt strength polypropylene as such

One embodiment of the present invention provides a polymer compound for preparing a high melt strength polypropylene, the polymer compound comprising a polypropylene, a basic metal oxide, and a glycerol fatty acid ester, wherein the glycerol fatty acid ester comprises at least one polyunsaturated fatty acid.

One embodiment of the present invention provides a high melt strength polypropylene which is obtainable by (or obtained by) electron beam irradiating a polymer compound according to an embodiment of the invention.

II.1.2.1 Polymer compound

One embodiment of the present invention provides a polymer compound for preparing a high melt strength polypropylene, the polymer compound comprising a polypropylene, a basic metal oxide, a glycerol fatty acid ester, and optionally one or more additives, wherein the glycerol fatty acid ester comprises at least one polyunsaturated fatty acid.

The polypropylene may have a melt flow rate $MFR_2$ in a range of 0.1 to 25 g/10 min, and preferably in a range of 0.2 to 8.0 g/10 min, like in a range of 0.2 to 5.0 g/10 min, determined according to ISO 1133 at 230°C and a load of 2.16 kg. The polypropylene may have a melting temperature Tm, determined by differential scanning calorimetry (DSC), in the range of from 150 to 170°C, preferably in a range of 158 to 168°C, like in a range of 160 to 168°C. The polypropylene may be a polypropylene which is obtained by Ziegler-Natta catalysis.

The polypropylene may be a propylene homopolymer, a heterophasic propylene copolymer (HECO), or a copolymer of propylene. The polypropylene may also be a blend of two or more polypropylenes selected from the group consisting of propylene homopolymers, a heterophasic propylene copolymers (HECOs), and copolymers of propylene. Preferably, the polypropylene is a propylene homopolymer, e.g., a linear propylene homopolymer. More preferably, the polypropylene is a propylene homopolymer having one or both of (preferably both of): (i) a melt flow rate $MFR_2$ in a range of 0.2 to 8.0 g/10 min, like in a range of 0.2 to 5.0 g/10 min, determined according to ISO 1133 at 230°C and a load of 2.16 kg, (ii) a melting temperature Tm, determined by differential scanning calorimetry (DSC), in a range of 158 to 168°C, like in a range of 160 to 168°C.

A suitable polypropylene is, for example, a (linear) polypropylene homopolymer having MFR of 0.6 g/10 min (230°C, 2.16 kg/cm$^2$; ISO 1133), a melting temperature Tm of 161°C, a crystallization temperature Tc of 116°C, which is produced by slurry process using a Ziegler-Natta catalyst.

The polypropylene being present in the polymer compound are known in the art and commercially available. Furthermore, the preparation of a suitable polypropylene, like a linear propylene homopolymers, is, for example, described in Moore, E. P. (996) Polypropylene Handbook. Polymerization, Characterization, Properties, Processing, Applications, Hanser Publishers; New York.

In particular, the polypropylene may be prepared in the presence of:

(a) a Ziegler-Natta catalyst comprising compounds of a transition metal of Group 4 to 6 according to IUPAC, a Group 2 metal compound and an internal donor;

(b) optionally a co-catalyst, and

(c) optionally an external donor.

This Ziegler-Natta catalyst can be any stereospecific Ziegler-Natta catalyst for propylene polymerization, which may be capable of catalyzing the polymerization and copolymerization of propylene and optional comonomers at a pressure of 500 to 10000 kPa, in particular 2500 to 8000 kPa, and at a temperature of 40 to 110°C, in particular of 60 to 110°C.

Embodiments and preferred embodiments of the basic metal oxide are as described herein, e.g., in section I, II.1, and II.1.1. These embodiments and preferred embodiments also apply to, and are disclosed herein in combination with, the polymer compound.

In the context of the embodiments described herein in section II.1.2.1 and II.1.2.2, the glycerol fatty acid ester being present in the polymer compound comprises at least one polyunsaturated fatty acid. Preferably, the at least one polyunsaturated fatty acid is $\alpha$-linolenic acid and/or linoleic acid. The glycerol fatty acid ester may be, but is not limited to, a triglyceride being a glycerol fatty acid ester with three fatty acids of which at least one (e.g., one, two or three) is a polyunsaturated fatty acid. For example, the triglyceride may be a glycerol fatty acid ester of three fatty acids of which at least one (e.g., one, two or three) is a polyunsaturated fatty acid selected from $\alpha$-linolenic acid and linoleic acid. In case the triglyceride is not a glycerol ester of three polyunsaturated fatty acids, it typically contains at least one monounsaturated fatty acid such as oleic acid or at least one saturated fatty acid such as palmitic acid or stearic acid.

The glycerol fatty acid ester being present in the polymer compound may be derived from a vegetable oil. Suitable vegetable oils are, but are not limited to, linseed oil, sunflower oil, walnut oil, or any mixture thereof. Preferably, glycerol fatty acid ester being present in the polymer compound is derived from linseed oil. The polymer compound may comprise a vegetable oil (e.g., linseed oil) which contains the glycerol fatty acid ester. In other words, the glycerol fatty acid ester may be present in the polymer compound as part of a vegetable oil (e.g., linseed oil).

A suitable glycerol fatty acid ester is, for example, a glycerol fatty acid ester being present in cold-pressed linseed oil.

The optional one or more additive may be one or more additive as described herein above in section II.1.1. The one or more additives may comprise or may be one or more antioxidants, one or more release agents, or a combination thereof. The one or more additives may be present in the polymer compound in combination with a polymer carrier resin originating from an additive masterbatch.

The polymer compound may have a MFR in a range of 0.2 to 25 g/10 min, and preferably in a range of 0.5 to 8.0 g/10 min, like in a range of 0.5 to 5.0 g/10 min, determined according to ISO 1133 at 230°C and a load of 2.16 kg.

The polymer compound may comprise (essentially consist of or consist of), based on the total weight of the polymer compound,

82 to 99 wt.%, like 87 to 98 wt.%, of polypropylene (e.g., a propylene homopolymer),

0.5 to 10 wt.%, like 1.0 to 8.0 wt.%, of the basic metal oxide (e.g. MgO),

0.02 to 4.0 wt.%, like 0.02 to 2.0 wt.%, of the glycerol fatty acid ester (e.g., a glycerol fatty acid ester comprising at least one polyunsaturated fatty acid which is $\alpha$-linolenic acid and/or linoleic acid),

optionally 0.01 to 4.0 wt.%, like 0.02 to 3.0 wt.%, of one or more additives.

The polymer compound may comprise (essentially consist of or consist of), based on the total weight of the polymer compound,

82 to 99 wt.%, like 87 to 98 wt.%, of polypropylene (e.g., a propylene homopolymer),

0.5 to 10 wt.%, like 1.0 to 8.0 wt.%, of the basic metal oxide (e.g. MgO),

0.02 to 4.0 wt.%, like 0.02 to 2.0 wt.%, of a vegetable oil comprising the glycerol fatty acid ester (e.g., linseed oil),

optionally 0.01 to 4.0 wt.%, like 0.02 to 3.0 wt.%, of one or more additives.

The weight amount of the components of the polymer compound may be selected to sum up 100 wt.%. In one embodiment, the one or more additives are present. When the one or more additives are present, the weight amount of the one or more additives may replace a corresponding weight amount of the polypropylene, as will be understood by those skilled in the art.

The polymer compound is obtainable by a conventional melt compounding or melt extrusion process. For example, the polymer compound may be obtained by melt compounding or melt extruding the components in a plastic extruder (e.g., a twin screw extruder). A suitable plastic extruder and extrusion conditions for the melt extrusion process are described in WO2022/238520 A1, e.g., in section B "examples".

II.1.2.2 High melt strength polypropylene

One embodiment of the present invention provides a high melt strength polypropylene which is obtainable (or is obtained) by electron beam irradiating a polymer compound according to an embodiment of the invention.

Irradiating the polymer compound by means of electron beam irradiation is believed to initiate a radical formation and a subsequent (long chain) branching of the polypropylene being present in the polymer compound. Irradiation of polymers by means of electron beam irradiation is known in the art. Typically, the amount of radiation applied to the respective sample matter is indicated by the unit Gray (Gy), which is the absorption of one joule of radiation energy per kilogram of matter. Since the absorbed energy at different depths of the matter varies, the radiation doses given in this disclosure refer to the amount of energy that is applied to the surface of the matter facing the electron beam per kilogram of the matter and are therefore described as "surface irradiation doses". A total surface irradiation dose of the electron beam radiation may be in a range of 50 to 150 kGy, like in a range of 60 to 140 KGy, like in a range of 80 to 120 KGy.

Methods to produce electron beams and apply irradiation doses are known in the art. Further it is well known, that the acceleration voltage and beam current of the used electron beam producing device have a direct influence on the penetration depth and transferable energy of the electron beam. It is preferred that the electron beam for the electron beam irradiation is produced with an acceleration voltage of at least 5 MeV, like in the range of 5 to 15 MeV, like in the range of 7 to 13 MeV or in the range of 8 to 12 MeV.

In order to transfer the energy (corresponds to the surface radiation dose) of the electron beam onto the respective matter, the matter has to be subjected to the electron beam. This may be done, for example, by using a moving belt that passes underneath the electron beam, thereby subjecting the polymer compound to the electron beam. The parameters that need to be adjusted in order to apply a specific radiation dose are known to the person skilled in the art. For example, a higher belt speed of the moving belt decreases the contact time of the electron beam with the matter to be irradiated and consequently lowers the applied surface radiation dose. The electron beam irradiation can be performed in an inert or in a non-inert environment. Preferably, the electron beam irradiation is carried out in an inert atmosphere (e.g., on a moving belt as described above). In particular, it is preferred that the irradiation is carried out under nitrogen. When the electron beam irradiation is performed in an inert environment, unwanted side reactions, such as uncontrolled peroxide formation by the oxygen in the air, may be avoided. A suitable equipment and process conditions for electron beam irradiating are described in WO2022/238520 A1, e.g., in section B "examples".

The electron beam irradiating step provides an irradiated polymer compound which comprises or which is composed of a high melt strength polypropylene. The irradiated polymer compound may contain reactive intermediates, like reactive radicals. In order to complete a branching reaction and/or deactivate the majority of radicals, the process may comprise a step of subjecting the irradiated compound to a heat treatment. The irradiated polymer compound may be subjected to a heat treatment at a temperature in the range of 40 to 150°C, like in a range of 60 to 120°C. The heat treatment may be carried out, for example, for a period of time in a range of 5 min to 240 min, like in a range of 30 to 180 min. The heat treatment can be applied in one or more steps with same or different temperature and/or time.

The irradiated, and optionally heat-treated, polymer compound may be melt blended with one or more additives, like one or more additives as described herein above, e.g., in section II.1.1.The melt blending may be carried out by conventional melt extrusion. For example, the irradiated, and optionally heat-treated, polymer compound may be at least melt blended with one or more antioxidants. The one or more antioxidants may be added in an amount of 0.02 to 1.5 wt.%, based on a combined weight of the one or more antioxidants and of the irradiated polymer compound. The one or more antioxidants may be added in form of an additive masterbatch.

Thus, the high melt strength polypropylene is obtainable by a process comprising the steps of:

- providing a polymer compound according to an embodiment of the invention,
- electron beam irradiating the polymer compound to provide an irradiated polymer compound,
- optionally heat treating the irradiated polymer compound, and
- optionally melt blending the irradiated, optionally heat-treated, polymer compound, with one or more additives.

Further, non-limiting embodiments of the polymer composition of the invention, particularly the polymer composition as described herein in section II.1.2, are described in the following list of numbered items H1 to H21:

H1 A polymer compound for preparing a high melt strength polypropylene, the polymer compound comprising a polypropylene, a basic metal oxide, and a glycerol fatty acid ester, wherein the glycerol fatty acid ester comprises at least one polyunsaturated fatty acid.

H2 The polymer compound of item H1, wherein the polypropylene has a melt flow rate $MFR_2$ in a range of 0.1 to 25 g/10 min, and preferably in a range of 0.2 to 8.0 g/10 min, like in a range of 0.2 to 5.0 g/10 min, determined according to ISO 1133 at 230 °C and a load of 2.16 kg.

H3 The polymer compound of item H1 or H2, wherein the polypropylene has a melting temperature Tm, determined by differential scanning calorimetry (DSC), in the range of from 150 to 170°C, preferably in a range of 158 to 168°C, like in a range of 160 to 168°C.

H4 The polymer compound of any one of items H1 to H3, wherein the polypropylene is a propylene homopolymer.

H5 The polymer compound of any one of items H1 to H4, wherein the polypropylene is a linear polypropylene.

H6 The polymer compound of any one of items H1 to H5, wherein the basic metal oxide selected from the group consisting of lithium oxide, sodium oxide, potassium oxide, magnesium oxide, calcium oxide, strontium oxide, barium oxide, titanium (+II or +III) oxide, chromium (+II or +III) oxide, manganese (+II or +III) oxide, and mixtures thereof.

H7 The polymer compound of any one of items H1 to H5, wherein the basic metal oxide is selected from the group consisting of basic earth alkaline oxides.

H8 The polymer compound of any one of items H1 to H5, wherein the basic metal oxide is magnesium oxide (MgO).

H9 The polymer compound of any one of items H1 to H8, wherein the basic metal oxide has a specific surface area, determined according to the BET method, in a range of 100 to 200 $m^2/g$, like in a range of 130 to 180 $m^2/g$.

H10 The polymer compound of any one of items H1 to H9, wherein the basic metal oxide has a particle size distribution d50, determined by laser diffraction, in a range of 2.0 to 8.0 $\mu$m, like in a range of 3.0 to 6.0 $\mu$m, and/ or a particle size distribution d90, determined by laser diffraction, in a range of 5.0 to 20 $\mu$m, like in a range of 7.5 to 15 $\mu$m.

H11 The polymer compound of any one of items H1 to H10, wherein the at least one polyunsaturated fatty acid is $\alpha$-linolenic acid and/or linoleic acid.

H12 The polymer compound of any one of items H1 to H11, wherein the glycerol fatty acid ester is a triglyceride being a glycerol fatty acid ester with three fatty acids of which at least one (e.g., one, two or three) is a polyunsaturated fatty acid, and preferably wherein the polyunsaturated fatty acid selected from $\alpha$-linolenic acid and linoleic acid.

H13 The polymer compound of any one of items H1 to H12, wherein the glycerol fatty acid ester being present in the polymer compound is derived from a vegetable oil.

H14 The polymer compound of any one of items H1 to H13, wherein the glycerol fatty acid ester is present in the polymer compound as part of a vegetable oil.

H15 The polymer compound of items H13 or H14, wherein the vegetable oil is linseed oil, sunflower oil, walnut oil, or any mixture thereof.

H16 The polymer compound of items H13 or H14, wherein the vegetable oil is (cold-pressed) linseed oil.

H17 The polymer compound of any one of items H1 to H16, having a MFR in a range of 0.2 to 25 g/10 min, and preferably in a range of 0.5 to 8.0 g/10 min, like in a range of 0.5 to 5.0 g/10 min, determined according to ISO 1133 at 230°C and a load of 2.16 kg.

H18 The polymer compound of any one of items H1 to H17, comprising (essentially consisting of or consisting of), based on the total weight of the polymer compound,

> 82 to 99 wt.%, like 87 to 98 wt.%, of the polypropylene,
> 0.5 to 10 wt.%, like 1.0 to 8.0 wt.%, of the basic metal oxide,
> 0.02 to 4.0 wt.%, like 0.02 to 2.0 wt.%, of the glycerol fatty acid ester, and
> optionally 0.01 to 4.0 wt.%, like 0.02 to 3.0 wt.%, of one or more additives.

H19 The polymer compound of any one of items H1 to H17, comprising (essentially consisting of or consisting of), based on the total weight of the polymer compound,

> 82 to 99 wt.%, like 87 to 98 wt.%, of the polypropylene,
> 0.5 to 10 wt.%, like 1.0 to 8.0 wt.%, of the basic metal oxide,
> 0.02 to 4.0 wt.%, like 0.02 to 2.0 wt.%, of a vegetable oil comprising the glycerol fatty acid ester,
> optionally 0.01 to 4.0 wt.%, like 0.02 to 3.0 wt.%, of one or more additives.

H20 A high melt strength polypropylene which is obtainable (or is obtained) by electron beam irradiating a polymer compound according to any one of items H1 to H19.

H21 The high melt strength polypropylene of item H20, being obtainable by a process comprising the following steps:

- providing a polymer compound according to any one of items H1 to H19,
- electron beam irradiating the polymer compound to provide an irradiated polymer compound,
- optionally heat treating the irradiated polymer compound, and
- optionally melt blending the irradiated, optionally heat-treated, polymer compound, with one or more additives.

**II.2 Composition for preparing food or a food composition**

One alternative embodiment of the present invention provides a composition for preparing food or a food composition comprising a basic metal oxide and a glycerol fatty acid ester. In such case, the composition typically does not contain polypropylene or does not contain a polyolefin. The composition for preparing food may be, but is not limited to, a frying fat or frying oil. The food composition may be, but is not limited to, a raw food composition which is typically heated before consumption (e.g., a premixed food recipe or the like).

For example, the composition may comprise the basic metal oxide (e.g., MgO) ) and a fat or vegetable oil comprising the glycerol fatty acid ester (typically in form of a triglyceride). The fat or the vegetable oil is not particularly and may be any fat or vegetable oil which is suitable as food or for preparing food. The composition may be useful for preparing food, e.g., for use as a composition for frying food, like for frying potato-derived food products (e.g., French fries, chips, etc.). The composition may be obtained by adding the basic metal oxide to the fat or the vegetable oil (or vice versa), and optionally mixing the components.

In one embodiment, the composition comprises the basic metal oxide (e.g., MgO) and a vegetable oil comprising the glycerol fatty acid ester typically in form of a triglyceride. The vegetable oil may be a vegetable oil as described herein above in connection with the method of the present invention and with the use of the present invention (e.g., linseed oil). The composition may be obtained by adding the basic metal oxide to the vegetable oil (or vice versa), and optionally mixing the components.

The composition may comprise (or may essentially consist of or may consist of) the basic metal oxide in an amount in a range of 2 to 90 wt.%, like in a range of 5 to 90 wt.%, like in a range of 10 to 90 wt.%, like in a range of 25 to 75 wt.%, like in a range of 35 to 65 wt.%, and the vegetable oil in an amount in a range of 10 to 98 wt.%, like in a range of 10 to 95 wt.%, like in a range of 10 to 90 wt.%, like in a range of 25 to 75 wt.%, like in a range of 35 to 65 wt.%, based on the total weight of the composition.

The composition may have a content of total volatile organic compounds ($VOC_{total}$) as determined by VDA277 of below 14000 $\mu$gC/g, like below 12000 $\mu$gC/g, like in a range of 8000 to 12000 $\mu$gC/g.

### III. Example section

### 111.1 Methods

The following definitions of terms and measuring methods apply for the above general description of the present disclosure as well as to the below examples unless otherwise defined.

III.1.1 Headspace gas chromatography coupled with mass spectrometry (HS-GC-MS)

Qualitative identification of small (volatile) molecules was carried out by headspace gas chromatography coupled with mass spectrometry (HS-GC-MS).

- Single Ion Monitoring (SIM), masterbatches and automotive compounds

Samples IE3, IE4, IE5 and CE2 (masterbatches, Table 4) and IE6, IE7, IE8 and CE3 (automotive compositions, Table 5) were cryo-milled, and 2 g were placed in a 20 mL headspace vial and subjected to HS-GC-MS using Single Ion Monitoring (SIM) according to the following protocol:

**Instrument parameters**

| HS Parameter (Agilent G1888 Headspace Sampler) | |
|---|---|
| Vial equilibration time: | 60 min |
| Oven temperature: | 120 °C |
| Loop temperature: | 130 °C |
| Transfer line temperature: | 140 °C |
| Low shaking | |
| **GC parameter (Agilent 7890A GC System)** | |
| Column: | ZB-WAX 7HG-G007-22 (30 m x 250 $\mu$m x 1 $\mu$m) |
| Carrier gas: | Helium 5.0 |

(continued)

| GC parameter (Agilent 7890A GC System) | |
|---|---|
| Flow: | 2 mL/min |
| Split: | 01:10 |
| GC oven program: | 35 °C for 0.1 min |
| | 10 °C / min until 200 °C |
| | 1 min |
| MS parameter (Agilent 5975C inert XL MSD) | |
| Acquisition mode: | SIM |
| SIM parameters: | |
| Group1 | Acrolein |
| Plot1 Ion | 65 |
| Software/Data evaluation | |
| MSD ChemStation E.02.02.1431 | |

• Total Ion Chromatogram (TIC)

(1) Polymer masterbatches and automotive compounds

Pellet samples (4g, non-milled) of IE3, IE4, IE5 and CE2 (masterbatches, Table 4) and of IE6, IE7, IE8 and CE3 (automotive compositions, Table 5) were placed in a 20 mL headspace vial and subjected to HS-GC-MS, obtaining the "Total Ion Chromoatogram" (TIC) according to the following protocol:

**Instrument parameters**

| HS Parameter (Agilent G1888 Headspace Sampler) | |
|---|---|
| Vial equilibration time: | 120 min |
| Oven temperature: | 100 °C |
| Loop temperature: | 110 °C |
| Transfer line temperature: | 120 °C |
| Low shaking | |
| GC parameter (Agilent 7890A GC System) | |
| Column: | ZB-WAX 7HG-G007-22 (30 m $\times$ 250 $\mu$m $\times$ 1 $\mu$m) |
| Carrier gas: | Helium 5.0 |
| Flow: | 2 mL/min |
| Split: | 01:10 |
| GC oven program: | 35 °C for 0.1 min |
| | 10 °C / min until 250 °C |
| | 1 min |
| MS parameter (Agilent 5975C inert XL MSD) | |
| Acquisition mode: | Scan (TIC) |

(continued)

| Scan parameters: | |
| --- | --- |
| Low mass: | 20 |
| High mass: | 200 |
| Threshold: | 10 |
| **Software/Data evaluation** | |
| MSD ChemStation E.02.02.1431 | |
| MSD ChemStation F.01.03.2365 | |

**Chromatogram evaluation parameters**

| AMDIS deconvolution parameters | |
| --- | --- |
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 44 m/z |
| Column bleed: | 207 m/z |
| Min. model peaks: | 2 |
| Min. S/N: | 10 |
| Min. certain peaks: | 0,5 |

TIC data were further deconvoluted with the aid of AMDIS software (AMDIS GC/MS Analysis Version 2.73; see parameters stated above) and compared to a custom target library which was based on the mass spectral library (NIST Mass Spectral Library (Version 2017)). In the custom target library, the respective mass spectra of selected substances (e.g. benzene) were included. Only when the recognised peak showed a minimum match factor of 80 and an experienced mass spectroscopist confirmed the match, a substance was accepted as "tentatively identified".

(2) Vegetable (Linseed) Oil

Samples Ref.1, Ref.2, IE1 and CE1 were placed in a 20 mL headspace vial. Sample Ref.1 was analysed by HS GC-MS using TIC mode. Samples Ref.2, IE1 and CE1 were analysed after heat treatment (see below) and then analysed analogous to Ref.1 via HS GC-MS using TIC mode. The TIC was obtained with the same parameters and procedures as described above with the exception that the temperature of the oven, loop and transfer line (HS parameters) was 80°C, 90°C, and 100°C, respectively.

III.1.2 Total volatile organic compounds ($VOC_{total}$)

Samples Ref.1, Ref.2, IE1 and CE1, prepared and pretreated as described below, were analysed for the emission of total volatile organic compound ($VOC_{total}$) by headspace gas chromatography using the standard test method described in VDA 277 (January 1995) (title: *"Nichtmetallische Werkstoff der Kfz-Innenausstattung - Bestimmung der Emission organischer Verbindungen"*).

III.1.3 Melt flow rate (MFR)

The melt flow rates $MFR_2$ were measured according to ISO 1133 with a load of 2.16 kg at 230 °C or 190°C as indicated in parenthesis for the defined parameter. The melt flow rate is that quantity of polymer in grams which the test apparatus standardised to ISO 1133 extrudes within 10 minutes at a temperature of 230 °C, respectively 190 °C, under a load of 2.16 kg.

III.1.4 CRYSTEX QC analysis (crystalline and soluble fractions method)

The crystalline (CF) and soluble fractions (SF) of polypropylene compositions as well as the comonomer content and intrinsic viscosities of the respective fractions were analysed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions were separated through temperature cycles of dissolution at 160°C, crystallization at 40°C and re-dissolution in 1,2,4-trichlorobenzene at 160°C. Quantification of SF and CF and determination of ethylene content (C2) were achieved by means of an integrated infrared detector (IR4) and for the determination of the intrinsic viscosity (IV) an online 2-capillary viscometer was used. The IR4 detector was a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector was calibrated with series of 8 EP copolymers with known Ethylene content in the range of 2 wt.% to 69 wt.-% (determined by 13C-NMR) and each at various concentrations, in the range of 2 and 13 mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2$$

(Equation 2)

The constants a to e for equation 1 and a to f for equation 2 were determined by using least square regression analysis.

The $CH_3/1000C$ was converted to the ethylene content in wt.% using following relationship:

$$Wt.\% \text{ (Ethylene in EP Copolymers)} = 100 - CH_3/1000C * 0.3$$

(Equation 3)

Amounts of Soluble Fraction (SF) and Crystalline Fraction (CF) were correlated through the XS calibration to the "Xylene Cold Soluble" (XCS) quantity and respectively Xylene Cold Insoluble (XCI) fractions, determined according to standard gravimetric method as per ISO16152. XS calibration was achieved by testing various EP copolymers with XS content in the range 2-31 wt.%. The determined XS calibration was linear:

$$Wt.\% \text{ XS} = 1,01* \text{ Wt.}\% \text{ SF}$$

(Equation 4)

Intrinsic viscosity (IV) of the parent EP copolymer and its soluble and crystalline fractions were determined with a use of an online 2-capillary viscometer and were correlated to corresponding IV's determined by standard method in decalin according to ISO 1628-3. Calibration was achieved with various EP PP copolymers with IV = 2-4 dL/g. The determined calibration curve was linear:

$$IV\ (dL/g) = a^*\ Vsp/c$$

(Equation 5)

The samples to be analysed were weighed out in concentrations of 10 mg/ml to 20 mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1 ,2,4-TCB containing 250 mg/l 2,6-tert-butyl-4-methylphenol (BHT) as antioxidant, the sample was dissolved at 160°C until complete dissolution is achieved, usually for 60 min, with constant stirring of 400 rpm. To avoid sample degradation, the polymer solution was blanketed with the $N_2$ atmosphere during dissolution. A defined volume of the sample solution was injected into the column filled with inert support where the crystallization of the sample and separation of the soluble fraction from the crystalline part was taking place. This process was repeated two times. During the first injection the whole sample was measured at high temperature, determining the IV [dl/g] and the C2[wt.-%] of the PP composition. During the second injection the soluble fraction (at low temperature) and the crystalline fraction (at high temperature) with the crystallization cycle were measured (wt.-% SF, wt.-% C2, IV).

III.1.5 Intrinsic viscosity

The intrinsic viscosity (iV) was measured according to DIN ISO 1628/1 (4th edition, 2021-02), in Decalin at 135°C.

III.1.6 Xylene cold solubles (XCS)

The xylene soluble fraction at room temperature (XCS, wt.%) was determined at 25 °C according to ISO 16152 (5th edition; 2005-07-01)

III.1.7 Density

The density was measured according to ISO 1183-187. Sample preparation was done by compression molding in accordance with ISO 1873-2:2007.

III.1.8 Melting temperature ($T_m$) and crystallization temperature ($T_c$)

Melting temperature (Tm) and crystallization temperature (Tc) were measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization temperature (Tc) is determined from the cooling step, while melting temperature (Tm) was determined from the second heating step.

**III.2 Materials**

III.2.1 Metal oxides

Basic metal oxide:

A magnesium oxide (MgO) was used as a basic metal oxide which is commercially available from Kyowa Chemical Industry Co., Ltd under the product name "*Kyowamag™ 150″* (other commercial suppliers of MgO exist as well). The CAS number of the material is: 1309-48-4. According to the product information provided by the supplier, the MgO has a specific surface area (BET) of about 155 $m^2/g$, a particle size distribution d50 of about 4.5 $\mu$m and a particle size distribution d90 of about 12 $\mu$m.

Comparative (amphoteric) metal oxide:

As a comparative (amphoteric) metal oxide, zinc oxide (ZnO) was used. The zinc oxide was a commercial product obtained from Lanxess under the product name "ZINKOXID AKTIV". The CAS number of the material is 1314-13-2.

III.2.2 Glycerol fatty acid esters

Glycerol fatty acid ester 1:

A linseed oil was used a source of glycerol fatty acid ester 1. The linseed oil was purchased from Lausitzer Ölmühle Hoyerswerda GmbH and was a cold-pressed linseed oil comprising approx.: 99 g triglycerides incl. 23 g monounsaturated fatty acids, 60 g polyunsaturated fatty acids and 15 g saturated fatty acids, and 0.22 g protein per 100 mL.

Glycerol fatty acid ester 2:

A glycerol monostearate (GMS), which was purchased from Danisco, is classified as GMS-90 (at least 90 % monostearate), and has the commercial name Dimodan HP FF.

III.2.3 Polypropylenes

Polypropylene 1 (PP1):

A propylene homopolymer which is available from Borealis AG under the tradename "HL708FB". It has a melt flow rate (230°C; 2.16 kg) of about 800 g/10 min.

Polypropylene 2 (PP2):

A propylene homopolymer which is available from Borealis AG under the tradename "HC001A-B1". having a melt flow rate (230°C; 2.16 kg) of about 2.7 g/10 min.

Heterophasic propylene copolymer (HECO):

The catalyst used for producing the HECO was a Ziegler-Natta Ti catalyst. Triethylaluminium as a cocatalyst and dicyclopentyldimethoxysilane as a donor was used. The subsequent polymerization has been effected under the conditions as described in Table 1 below.

**Table 1:** Polymerization conditions and properties of the HECO

| Polymerization conditions | | | | Product properties | | |
|---|---|---|---|---|---|---|
| | | | | | | |
| Co/ED | [mol/mol] | 40 | | **Pellet** | | |
| Co/Ti | [mol/mol] | 230 | | XCS | [wt.%] | 31.5 |
| Temperature | [°C] | 30 | | C2(XCS) | [wt.%] | 44.8 |
| Residence time | [min] | 5 | | iV(XCS) | [dl/g] | 2.3 |
| **Loop reactor** | | | | $MFR_2$ | [g/10min] | 18 |
| Temperature | [°C] | 72 | | Tm | [°C] | 165 |
| Split | [wt.%] | 30 | | Tc | [°C] | 115 |
| H2/C3 | [mol/kmol] | 18.8 | | **CRYSTEX analysis** | | |
| $MFR_2$ | [g/10min] | 110 | | SF | [wt.%] | 30.9 |
| **1st Gas phase reactor** | | | | C2 | [wt.%] | 19.5 |
| Temperature | [°C] | 80 | | C2(SF) | [wt.%] | 44.5 |
| Split | [wt.%] | 35 | | C2(CF) | [wt.%] | 8.9 |
| H2/C3 | [mol/kmol] | 136.8 | | IV | [dl/g] | 1.7 |
| $MFR_2$ | [g/10min] | 80 | | IV(SF) | [dl/g] | 3.4 |
| MFR(GPR1) | [g/10min] | 32 | | IV(CF) | [dl/g] | 1.4 |
| XCS | [wt.%] | 2 | | | | |

(continued)

| 2nd Gas phase reactor | | | | | | |
|---|---|---|---|---|---|---|
| Temperature | [°C] | 70 | | | | |
| C2/C3 | [mol/kmol] | 514.9 | | | | |
| H2/C2 | [mol/kmol] | 119 | | | | |
| Split | [wt.%] | 17 | | | | |
| C2 | [wt.%] | 7.9 | | | | |
| $MFR_2$ | [g/10min] | 15 | | | | |
| 3rd Gas phase reactor | | | | | | |
| Temperature | [°C] | 85 | | | | |
| C2/C3 | [mol/kmol] | 1429 | | | | |
| H2/C2 | [mol/kmol] | 285.6 | | | | |
| Split | [wt.%] | 18 | | | | |
| C2 | [wt.%] | 18.9 | | | | |
| $MFR_2$ | [g/10min] | 18 | | | | |

The HECO was compounded in a with 0.15 wt.% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4) and 0.05 wt.% of Castearate (CAS-no.1592-23-0, commercially available from Faci, Italy).

III.2.4 Ethylene-based elastomer (E)

The ethylene-based elastomer was the product "Queo 8203" which is commercially available from Borealis AG. It is a copolymer of ethylene and 1-octene having a melt flow rate (190°C; 2.16 kg) of about 3.0 g/10 min and a density of about 883 kg/m3.

III.2.5 Mineral filler

A talc was used which is commercially available from Imery's under the tradename "Steamic T1 Ca". The talc has a median particle size d50 within a range of 1.8 to 2.5 $\mu$m.

III.2.6 Additives

Additive 1 (AD1):

The antioxidant "Richfos 168" which is a commercial phosphite-based antioxidant.

Additive 2 (AD2):

Calcium stearate was the commercial product "Ceasit-Fi".

**III.3 Examples**

III.3.1 Example series A

Each one of the metal oxides MgO and ZnO were tested for their ability to reduce the amount and types of (volatile) decomposition products (incl. acrolein) upon heating of the vegetable oil as follows:
A sample of the linseed oil before heating was taken as a reference (Ref. 1). A paste was formed by adding 50 wt.% of MgO or ZnO to the linseed oil. This paste was heated to 250 °C and held for 5 minutes. Afterwards, the oil was allowed to cool to room temperature and a sample was taken for analysis by HS-GC-MS for qualitative identification of small (volatile) molecules or for testing according to VDA277 by HS-GC-FID. In addition, a reference example was made by heating the linseed oil to 250 °C for 5 minutes without adding MgO or ZnO (Ref. 2). Analysis of samples (Ref. 1, Ref. 2, IE1 and IE2) by HS-GC included a second heating step (80°C, 2h) as part of the analytical method, meaning that the description of Ref. 1 ("linseed oil, not heated") refers to the absence of heating step prior to this analysis. The test results are shown in tables 2 and 3 below.

**Table 2:** Qualitative analysis of volatile compounds according to HS-GC-MS analysis

| Example | Ref. 1 | Ref. 2 | IE1 | CE1 |
|---|---|---|---|---|
| | Linseed oil, not heated | Linseed oil, heated | Linseed oil, heated | Linseed oil, heated |
| Metal oxide | none | none | MgO | ZnO |
| | | | | |
| Acetaldeyde | 0 | + | + | +++ |
| Propanal | 0 | + | - | +++ |
| Acetone | 0 | 0 | + | + |
| Acrolein | 0 | +++ | 0 | +++ |
| Methanol | 0 | - | + | 0 |
| 2-Butanone | 0 | 0 | + | 0 |
| Ethanol | 0 | + | +++ | ++ |
| Benzene | 0 | 0 | 0 | 0 |
| 2-Ethyl furan | 0 | + | + | + |
| Pentanal | 0 | 0 | 0 | + |
| 1-Propanol | + | + | ++ | 0 |
| 2-Butenal | 0 | ++ | 0 | ++ |
| 1-Penten-3-ol | 0 | ++ | + | + |
| (E,E)-2,4-heptadienol | 0 | + | 0 | 0 |
| (E,E)-2,4-heptadienal | 0 | + | 0 | ++ |

Relative ranking (across different columns):

0 = either not identified or negligible peak relative to other columns

+ = noticeable (detectably) increased over column showing lowest result (which can be zero or negligible)

++ = higher than +

+++ = higher than ++, and typically one or two orders in peak intensity compared to lowest result)

- = less than in neat (non-pre heated) oil

**Table 3:** Total volatile organic compounds (VOC$_{total}$) according to VDA 277

| Example | Run (#) | Amount in 20 mL HS-Vial (mg) | $\mu$gC/g (VDA277) | average $\mu$gC/g (IVDA277) |
|---|---|---|---|---|
| Ref. 1 (linseed oil, not heated) | 1 | 39 | 9574 | 9693 |
| | 2 | 40 | 9812 | |
| Ref. 2 (linseed oil, heated) | 1 | 39 | 15646 | 15273 |
| | 2 | 41 | 14901 | |
| IE1 (Linseed oil/MgO) | 1 | Oil: 38; MgO: 39 | 10285 | 10115 |
| | 2 | Oil: 39, MgO: 39 | 9944 | |

(continued)

| Example | Run (#) | Amount in 20 mL HS-Vial (mg) | μgC/g (VDA277) | average μgC/g (IVDA277) |
|---|---|---|---|---|
| CE1 (Linseed oil/ZnO) | 1 | Oil: 40; ZnO: 39 | 14264 | 15315 |
| | 2 | Oil: 40, ZnO: 39 | 16365 | |

III.3.2 Examples series B

Polymer compositions (polymer masterbatches) were prepared on a twin-screw plastic extruder ("Zwillingsschnecken Extruder ZSK 32" by Coperion) using a screw speed of 3000 revolutions per minute (rpm), a throughput of 100 kg per hour, vacuum of 500 - 650 millibar (mBar) and barrel temperatures between 170 and 220 °C. The used recipes are as described in table 4 herein below. The products were stored in sealed plastic/aluminum bags to avoid loss of volatiles during storage.

Table 4: Composition of polymer compositions (masterbatches) IE3 to IE5 and CE2

| Component | | IE3 | IE4 | IE5 | CE2 |
|---|---|---|---|---|---|
| PP1 | [wt.%] | 17.6 | 15.6 | 13.6 | 16.5 |
| E | [wt.%] | 28 | 26 | 23 | 31 |
| Talc | [wt.%] | 46.9 | 45.9 | 45.9 | 50 |
| GMS | [wt.%] | 0.75 | 0.75 | 0.75 | 0.75 |
| MgO | [wt.%] | 5 | 10 | 15 | - |
| AD1 | [wt.%] | 0.3 | 0.3 | 0.3 | 0.3 |
| AD2 | [wt.%] | 0.05 | 0.05 | 0.05 | 0.05 |
| PP2* | [wt.%] | 1.4 | 1.4 | 1.4 | 1.4 |
| | | | | | |
| Total | [wt.%] | 100 | 100 | 100 | 100 |
| *Additive carrier | | | | | |

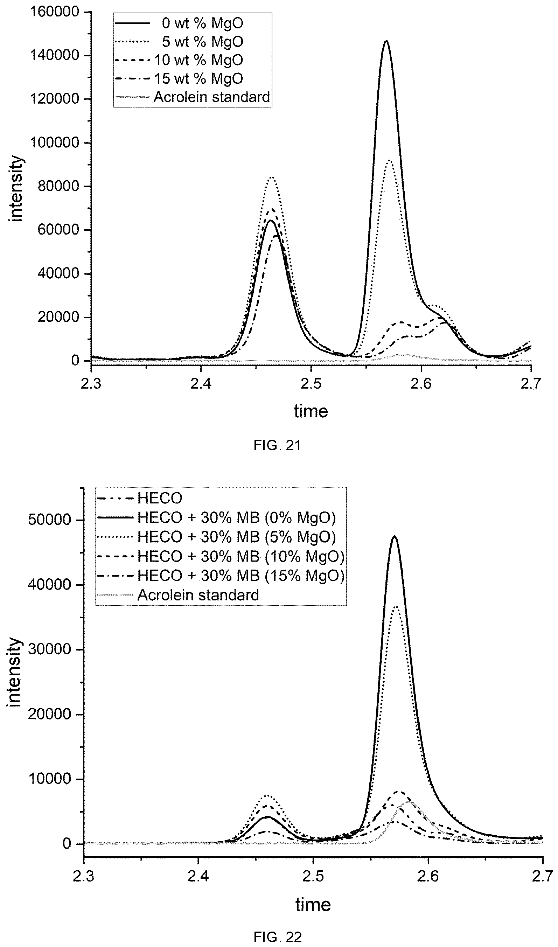

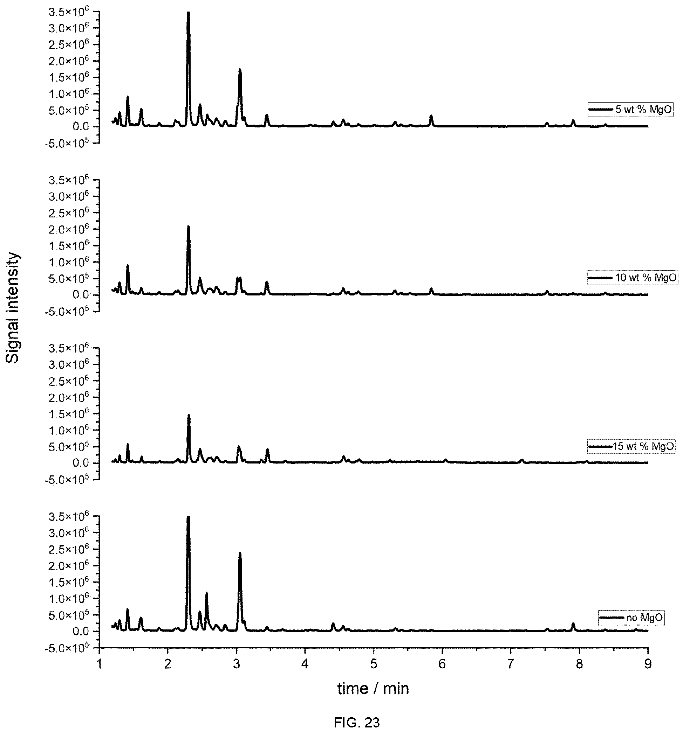

Samples of examples IE3 to IE5 and CE2 were analysed by HS-GC analysis within two weeks after their production. The HS-GC analysis showed that an intense peak of acrolein was measured for the sample of example CE2, whereas the intensity of the acrolein peak was reduced in the measurement of the sample from example IE3 and substantially more reduced in the measurement of the sample from examples IE4 and IE5. As can be seen from FIG. 21, the sample from example IE5 contained the lowest measurable amount of acrolein. Other volatile components, like acetaldehyde (eluting at about 1.6 min), were also substantially reduced in examples IE3 to IE5, when compared to example CE2 (cf. FIG. 23).

The polymer compositions according to examples IE3 to IE5 and CE2 were used as polymer masterbatches for preparing different automotive compositions by melt compounding each one of the polymer compositions with the HECO according to the recipe described in table 5 herein below.

The melt compounding with carried out on a twin-screw plastic extruder ("Zwillingsschnecken Extruder ZSK 18" by Coperion) using a screw speed of 400 revolutions per minute (rpm), a throughput of 3 kg per hour, vacuum of 300 - 400 millibar (mBar) and barrel temperatures between 180 and 220 °C.

Table 5: Compositions of polymer compositions (automotive compositions) IE6 to IE8 and CE3

| | Component | | IE6 | IE7 | IE8 | CE3 |
|---|---|---|---|---|---|---|
| | HECO | [wt.%] | 70 | 70 | 70 | 70 |

(continued)

|  | Component |  | IE6 | IE7 | IE8 | CE3 |
|---|---|---|---|---|---|---|
| Masterbatch | IE3 | [wt.%] | 30 | - | - | - |
|  | IE4 | [wt.%] | - | 30 | - | - |
|  | IE5 | [wt.%] | - | - | 30 | - |
|  | CE2 | [wt.%] | - | - | - | 30 |
|  |  |  |  |  |  |  |
| Total |  |  | 100 | 100 | 100 | 100 |

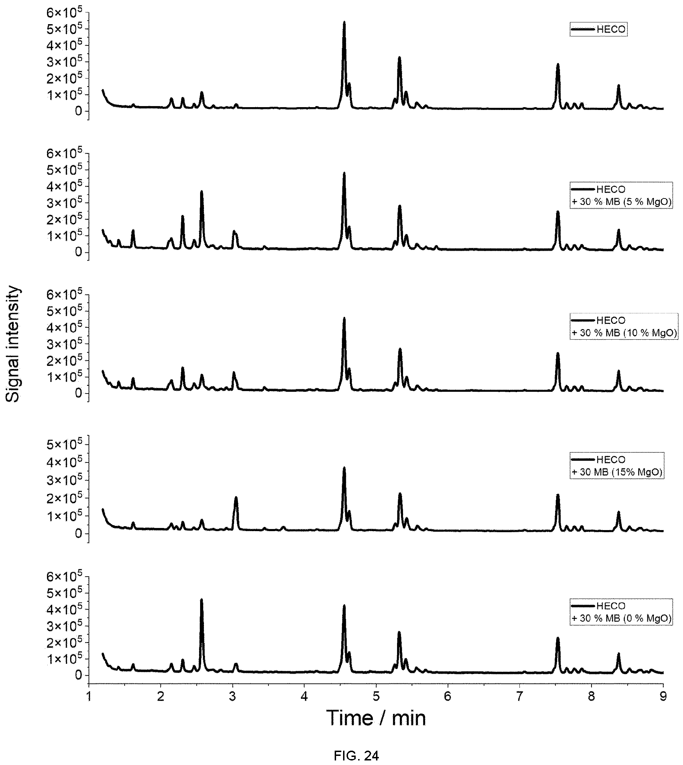

The products were stored in sealed plastic/aluminum bags to avoid loss of volatiles during storage. Samples of examples IE6 to IE8 and CE3 were analysed by HS-GC analysis (within two weeks after their production) and compared to a sample of the pure HECO as a reference example (Ref. 3). The HS-GC analysis showed that an intense peak of acrolein was measured for the sample of example CE3, whereas the intensity of the acrolein peak was reduced in the measurement of the sample from example IE6 and substantially more reduced in the measurement of the sample from examples IE7 and IE8. As can be seen from FIG. 22, the sample from example IE8 contained the lowest measurable amount of acrolein. Other volatile components, like acetaldehyde (eluting at about 1.6 min), were also substantially reduced in examples IE6 to IE8, when compared to example CE3 (cf. FIG. 24).

**Claims**

1.   Use of a basic metal oxide for reducing the formation of one or more decomposition products upon heating of a glycerol fatty acid ester.

2.   The use according to claim 1, wherein the one or more decomposition products is/are selected from the group consisting of acetaldehyde, acetone, propanal, acrolein, pentanal, butenal, and heptadienal, and preferably the one or more decomposition products is/are acetaldehyde and/or acrolein.

3.   The use according to claim 1, wherein the one or more decomposition product is acrolein.

4.   The use according to any one of claims 1 to 3, wherein the glycerol fatty acid ester is a monoester of glycerol and a saturated fatty acid, and preferably the glycerol fatty acid ester is glycerol monostearate.

5.   The use according to any one of claims 1 to 3, wherein the glycerol fatty acid ester is a triglyceride containing one or more esters of a fatty acid selected from the group of monounsaturated fatty acids and polyunsaturated fatty acids, and preferably the glycerol fatty acid ester is a triglyceride containing one or more esters of a fatty acid selected from the group of polyunsaturated fatty acids.

6.   The use according to claim 5, wherein the triglyceride is present as part of a vegetable oil.

7.   The use according to any one of claims 1 to 6, wherein the basic metal oxide is selected from the group consisting of basic alkaline oxides and basic earth alkaline oxides.

8.   The use according to any one of claims 1 to 7, wherein the basic metal oxide is magnesium oxide.

9.   The use according to any one of claims 1 to 8, wherein the heating is a heating to a maximum temperature of at least 150°C, like in a range of 180 to 260°C.

10.  The use according to any one of claims 1 to 9, wherein the basic metal oxide and the glycerol fatty acid ester are present in combination with at least one polypropylene, and wherein the heating is carried out as part of a process for preparing a polymer composition, e.g., by melt mixing, melt compounding or melt extrusion.

11.  A polymer composition comprising polypropylene, a basic metal oxide and a glycerol fatty acid ester.

**12.** The polymer composition according to claim 11, wherein the basic metal oxide is magnesium oxide.

**13.** The polymer composition according to claim 11 or claim 12, wherein the polymer composition further comprises an ethylene-based elastomer, a mineral filler, and optionally one or more additives.

**14.** The polymer composition according to claim 13, wherein

the basic metal oxide is magnesium oxide,
the ethylene-based elastomer is a copolymer of ethylene and 1-octene,
the mineral filler is talc, and
the glycerol fatty acid ester is glycerol monostearate.

**15.** The polymer composition according to claim 11 or claim 12, wherein the polymer composition is a polymer compound, and the glycerol fatty acid ester comprises at least one polyunsaturated fatty acid which is selected from $\alpha$-linolenic acid, linoleic acid and a combination thereof.

**16.** A high melt strength polypropylene which is obtained by electron beam irradiating the polymer composition according to claim 15.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

Europäisches Patentamt
European Patent Office
Office européen des brevets

# EUROPEAN SEARCH REPORT

**Application Number**

EP 24 17 7689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/190303 A1 (ROHRMANN JUERGEN [DE] ET AL) 18 June 2020 (2020-06-18) | 10-14 | INV.<br>C08K3/22 |
| Y | * examples 1-5; tables 1,2 *<br>* example 7; tables 5,6 * | 16 | C08K5/103<br>C08L23/12 |
| | ----- | | |
| X | RU 2 725 606 C2 (OOO VEKTOR POLIMIR [RU]) 3 July 2020 (2020-07-03)<br>* examples 3,9-13 *<br>* claims 1,2 * | 11-13 | |
| | ----- | | |
| Y | WO 2022/238520 A1 (BOREALIS AG [AT]) 17 November 2022 (2022-11-17) | 16 | |
| A | * examples IE1-IE7 *<br>* claims * | 11-15 | |
| | ----- | | |
| E | WO 2024/189079 A2 (BOREALIS AG [AT]) 19 September 2024 (2024-09-19)<br>* claims * | 11-16 | |
| | ----- | | |

**TECHNICAL FIELDS SEARCHED (IPC)**

C08K

The present search report has been drawn up for all claims

| Place of search | Date of completion of the search | Examiner |
|---|---|---|
| Munich | 21 October 2024 | Russell, Graham |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 7689

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| US 2020190303 | A1 | 18-06-2020 | BR 112019024854 A2 | | 09-06-2020 |
| | | | CN 110651000 A | | 03-01-2020 |
| | | | EP 3638729 A1 | | 22-04-2020 |
| | | | JP 6907342 B2 | | 21-07-2021 |
| | | | JP 2020521026 A | | 16-07-2020 |
| | | | KR 20200013249 A | | 06-02-2020 |
| | | | RU 2734592 C1 | | 20-10-2020 |
| | | | US 2020190303 A1 | | 18-06-2020 |
| | | | WO 2018228929 A1 | | 20-12-2018 |
| RU 2725606 | C2 | 03-07-2020 | NONE | | |
| WO 2022238520 | A1 | 17-11-2022 | CA 3219389 A1 | | 17-11-2022 |
| | | | CN 117321104 A | | 29-12-2023 |
| | | | EP 4337705 A1 | | 20-03-2024 |
| | | | JP 2024516870 A | | 17-04-2024 |
| | | | KR 20230172607 A | | 22-12-2023 |
| | | | TW 202244074 A | | 16-11-2022 |
| | | | US 2024228685 A1 | | 11-07-2024 |
| | | | WO 2022238520 A1 | | 17-11-2022 |
| WO 2024189079 | A2 | 19-09-2024 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022238520 A1
- EP 0591224 A
- EP 1028984 A
- EP 1183307 A

**Non-patent literature cited in the description**

- **JIANG et al.** Origin and Fate of Acrolein in Foods. *Foods*, 2022, vol. 11, 1976
- **SATYARTHI et al.** An overview of catalytic conversion of vegetable oils/fats into middle distillates. *Catalysis Science & Technology*, 2013, vol. 3 (1), 70-80
- **O' MARA**. *Combustion of PVC*, 1977
- **MONTAUDO, G.** ; **PUGLISI, C.** Evolution of aromatics in the thermal degradation of poly (vinyl chloride): a mechanistic study. *Polymer Degradation and Stability*, 1991, vol. 33 (2), 229-262
- **SHRIVER** ; **ATKINS**. Inorganic Chemistry. Oxford University Press, 2010, 126, 127
- **HANS ZWEIFEL**. Plastic Additives Handbook. 2009, 1141-1190